# EUROPÄISCHE PATENTSCHRIFT

(11) **EP 0 931 810 B1**
(45) Veröffentlichungstag und Bekanntmachung des Hinweises auf die Patenterteilung: **27.02.2002**
(21) Anmeldenummer: 99810033.3
(22) Anmeldetag: 19.01.1999
(51) Int. Cl.: C08K 5/3435, C08L 77/00, C08G 64/42, C08G 63/91, C08G 69/48, C08L 67/02, C08L 69/00

(54) **Molekulargewichtserhöhung und Stabilisierung von Polykondensaten mit Diepoxiden von sterisch gehinderten Aminen**
Increasing the molecular weight and stabilisation of polycondensates with hindered amine diepoxides
Augmentation de la masse moléculaire ainsi que stabilisation de résines polycondensées à l'aide de di-exposides d'aminés stériquement encombrées

(30) Priorität: 26.01.1998 CH 17298
(43) Veröffentlichungstag der Anmeldung: 28.07.1999
(73) Patentinhaber: Ciba Specialty Chemicals Holding Inc., 4057 Basel (CH)
(72) Erfinder: Pfaendner, Rudolf, 64668 Rimbach (DE); Steinmann, Alfred, 1724 Praroman (CH); Herbst, Heinz, 64646 Heppenheim (DE); Hoffmann, Kurt, 79585 Weitenau-Steinen (DE)

(56) Entgegenhaltungen:
- EP-A- 0 097 616
- EP-A- 0 604 367
- WO-A-97/30105

## Beschreibung

Die Erfindung betrifft ein Verfahren zur Molekulargewichtserhöhung und gleichzeitiger Stabilisierung von Polykondensaten gegen den Einfluss von UV-Licht und Wärme sowie die nach dem Verfahren erhältlichen Polykondensate.

Polykondensate, wie Polyester, Polyamide und Polycarbonate, sind wichtige Ingenieurkunststoffe mit vielfältigen Einsatzmöglichkeiten, beispielsweise in Form von Folien, Flaschen, Fasern und Spritzgussteilen. Diesen Polymeren ist gemeinsam, dass sie durch Polykondensationsreaktionen hergestellt werden. Für spezifische Anwendungen werden im allgemeinen spezifische Typen mit charakteristischem Molekulargewichtsbereich eingesetzt.

Wünschenswert wäre der Einsatz eines niedermolekularen Polykondensats, das in grossen Mengen hergestellt werden kann, und das anschliessend durch ein einfaches Verfahren auf das notwendige oder gewünschte Molekulargewicht gebracht wird.

Die Schädigung von Polykondensaten durch die Verarbeitung und den Gebrauch führt infolge Kettenspaltungen vorwiegend zu Polymerbruchstücken mit funktionellen Endgruppen.

Die mechanischen und physikalischen Eigenschaften hängen entscheidend vom Molekulargewicht des Polymeren ab. Eine hochwertige Wiederverwertung von gebrauchten Polyestern, Polyamiden und Polycarbonaten und von Produktionsabfällen z.B. aus der Faserproduktion und dem Spritzgiessbereich ist aufgrund eines reduzierten Molekulargewichts ohne eine Nachbehandlung nur eingeschränkt möglich.

Eine Verbesserung der Materialeigenschaften von gebrauchten beziehungsweise thermisch oder hydrolytisch vorgeschädigten Polykondensaten ist grundsätzlich bekannt. Beispielsweise sind sie einer Nachkondensation im festen Zustand zugänglich (S.Fakirov, Kunststoffe 74 (1984), 218 und R.E.Grützner, A.Koine, Kunststoffe 82 (1992), 284). Diese Methode ist jedoch zeitaufwendig und reagiert darüber hinaus empfindlich auf Verunreinigungen, wie sie in Altmaterial zugegen sein können.

Weiterhin wurde zur Festphasenkondensation von Polyamiden in der EP-0 410 230 vorgeschlagen, Phosphorsäure, phosphorige oder phosphonige Säure als Katalysator zu verwenden.

Von F. Mitterhofer werden Untersuchungen mit einem Diphosphonit als Verarbeitungsstabilisator bei Polymerrecyclaten beschrieben (C.A. 91, 124534).
Bekannt ist auch, vernetzte Polyamide durch Verwendung eines Epoxides und eines üblichen Polyamidkatalysators, bevorzugt Natriumhypophosphit, zu erhalten (EP-A-0 295 906). Die so erhältlichen vernetzten Polyamide weisen typischerweise eine gegenüber dem Ausgangspolyamid sehr hohe Schmelzviskosität und damit sehr eingeschränkte Verarbeitbarkeit auf.

Aus der US 5 807 966 ist ebenfalls ein Verfahren bekannt, das eine Molekulargewichtserhöhung von Polykondensaten, wie Polyestern, Polyamiden und Polycarbonaten sowie entsprechenden Copolymeren und Blends in verhältnismässig kurzer Zeit erlaubt, wobei die Molekulargewichtserhöhung dabei im wesentlichen ohne Vernetzung erfolgt. Dabei wird dem Polykondensat mindestens ein Diphosphonit beziehungsweise ein Gemisch aus mindestens einem Diphosphonit und mindestens einer difunktionellen Verbindung, zum Beispiel ein Diepoxid zugesetzt und bis zum Aufschmelzen erwärmt.

Für bestimmte Anwendungen ist für das geforderte Eigenschaftsprofil neben einem hohen Molekulargewicht auch eine ausreichende Langzeit-Wärmestabilität und eine hohe Lichtstabiltät erforderlich. Dies kann bei den im Stand der Technik bekannten Verfahren durch die Zugabe weiterer Komponenten erreicht werden, die speziell die geforderten Eigenschaften verbessern. In der Regel ist hierfür jedoch eine umfangreiche Rezepturentwicklung notwendig. Vorteilhaft wäre es deshalb für den Anwender, einen Zusatz zur Verfügung zu haben, der alle geforderten Eigenschaften direkt erfüllt.

Aufgabe der vorliegenden Erfindung ist daher die Bereitstellung eines geeigneten Zusatzes zum Molekulargewichtsaufbau von Polykondensationskunststoffen, insbesondere von Polyamiden, der zusätzlich eine gute Wärmestabilität und Lichtstabilität bewirkt.

Die vorliegende Erfindung löst dieses Problem, indem Diepoxide eingesetzt werden, welche als Teilstruktur eine sterisch gehinderte Amingruppe aufweisen.

Durch den Zusatz solcher Verbindungen zu einem Polykondensat wird eine wesentliche Molekulargewichtserhöhung des Polykondensates bewirkt und die mechanischen Eigenschaften nach einer Wärmelagerung oder Bewitterung werden erheblich verbessert.

Die erfindungsgemässen Diepoxide zeichnen sich auch dadurch aus, dass der Molekulargewichtsaufbau sehr rasch verläuft, so dass nur kurze Reaktionszeiten notwendig sind. Diepoxide auf Basis Bisphenol A, wie sie für den Molekulargewichtsaufbau im Stand der Technik beschrieben sind, weisen eine deutlich niedrigere Reaktivität auf, was eine längere Reaktionszeit notwendig macht.

Mit Hilfe des erfindungsgemässen Verfahrens kann man insbesondere bei Polykondensatrecyclaten aus der Sammlung gebrauchter technischer Teile wie z.B. aus Automobil- und Elektroanwendungen eine Molekulargewichtserhöhung und Hitze/Lichtstabilität erreichen, welche es ermöglicht, die Recyclate wieder in den Ursprungsanwendungen zu verwenden.

Darüberhinaus ist es möglich durch die gleichzeitig verbesserte Licht- und Hitzestabilität das Einsatzgebiet recyclierter Polykondensate, insbesondere recyclierter Polyamide, auf neue Einsatzgebiete wie zum Beispiel Aussenanwendungen zu erweitern.

Solche Recyclate stammen beispielsweise auch aus Wertstoffsammlungen der Industrie oder des Haushalts, Produktionsabfällen oder Rücknahmeverpflichtungen.

Ein Gegenstand der Erfindung ist daher ein Verfahren zur gleichzeitigen Molekulargewichtserhöhung und Stabilisierung, im wesentlichen ohne Vernetzung, von Polykondensaten, dadurch gekennzeichnet, dass man ein Polyamid, einen Polyester, ein Polycarbonat oder ein Copolymer oder Blend dieser Polymeren unter Zusatz mindestens eines Diepoxides, welches die Epoxidgruppen endständig und als weiteres Strukturelement einen Tetramethylpiperidin Rest mittelständig zwischen den Epoxidgruppen enthält, auf eine Temperatur oberhalb des Schmelzpunktes bei kristallinen Polykondensattypen bzw. oberhalb des Glaspunktes bei amorphen Polykondensattypen des Polymeren erhitzt.

Neben Polyester, Polyamid oder Polycarbonat werden von der vorliegenden Erfindung auch die entsprechenden Copolymeren und Blends, wie z.B. PBT/PC, PBT/ASA, PBT/ABS, PET/ABS, PET/PC, PBT/PET/PC, PBT/PET, PA/PP und PA/ABS, und Mischungen aus Neukunststoff und Recyclat umfasst.

Unter Polyamiden, d.h. sowohl Neu-Polyamiden wie Polyamid-Recyclaten, sind aliphatische und aromatische Polyamide oder Copolyamide, die sich von Diaminen und Dicarbonsäuren und/oder von Aminocarbonsäuren oder den entsprechenden Lactamen ableiten, zu verstehen. Geeignete Polyamide sind beispielsweise:
PA 6, PA 11, PA 12, PA 46, PA 66, PA 69, PA 610, PA 612, sowie auch amorphe Polyamide vom Typ Trogamid PA 6-3-T und Grilamid TR55. Polyamide der genannten Art sind allgemein bekannt und im Handel erhältlich.

Vorzugsweise werden als Polyamide PA6 und PA6.6 oder ihre Mischungen, sowie Recyclate auf dieser Basis eingesetzt.

Bei dem Polyester, d.h. sowohl Neu-Polyester wie Polyesterrecyclat, kann es sich um Homo-oder Mischpolyester handeln, die aus aliphatischen, cycloaliphatischen oder aromatischen Dicarbonsäuren und Diolen oder Hydroxycarbonsäuren aufgebaut sind.

Die aliphatischen Dicarbonsäuren können 2 bis 40 C-Atome, die cycloaliphatischen Dicarbonsäuren 6 bis 10 C-Atome, die aromatischen Dicarbonsäuren 8 bis 14 C-Atome, die aliphatischen Hydroxycarbonsäuren 2 bis 12 C-Atome und die aromatischen wie cycloaliphatischen Hydroxycarbonsäuren 7 bis 14 C-Atome enthalten.

Die aliphatischen Diole können 2 bis 12 C-Atome, die cycloaliphatischen Diole 5 bis 8 C-Atome und die aromatischen Diole 6 bis 16 C-Atome enthalten.

Als aromatische Diole werden jene bezeichnet, bei denen zwei Hydroxygruppen an einen oder verschiedene aromatische Kohlenwasserstoffreste gebunden sind.

Ferner ist es möglich, dass die Polyester mit geringen Mengen, z.B. 0,1 bis 3 Mol%, bezogen auf die vorhandenen Dicarbonsäuren, durch mehr als difunktionelle Monomeren (z.B. Pentaerythrit, Trimellitsäure, 1,3,5-Tri(hydroxyphenyl)benzol, 2,4-Dihydroxybenzoesäure oder 2-(4-Hydroxyphenyl)-2-(2,4-dihydroxyphenyl)propan) verzweigt sind.

Bei Polyestern aus mindestens 2 Monomeren können diese statistisch verteilt sein oder es kann sich um Blockcopolymere handeln.

Geeignete Dicarbonsäuren sind lineare und verzweigte gesättigte aliphatische Dicarbonsäuren, aromatische Dicarbonsäuren und cycloaliphatische Dicarbonsäuren. Als aliphatische Dicarbonsäuren kommen jene mit 2 bis 40 C-Atome in Frage, z.B. Oxalsäure, Malonsäure, Dimethylmalonsäure, Bernsteinsäure, Pimelinsäure, Adipinsäure, Trimethyladipinsäure, Sebacinsäure, Azelainsäure und Dimersäuren (Dimerisationsprodukte von ungesättigten aliphatischen Carbonsäuren wie Oelsäure), alkylierte Malon- und Bernsteinsäuren wie Octadecylbernsteinsäure.

Als cycloaliphatische Dicarbonsäuren kommen in Frage:
1,3-Cyclobutandicarbonsäure, 1,3-Cyclopentandicarbonsäure, 1,3- und 1,4-Cyclohexandicarbonsäure, 1,3- und 1,4-(Dicarboxylmethyl)-cyclohexan, 4,4'-Dicyclohexyldicarbonsäure.

Als geeignete aromatische Dicarbonsäuren kommen in Frage:
Insbesondere Terephthalsäure, lsophthalsäure, o-Phthalsäure, sowie 1,3-, 1,4-, 2,6- oder 2,7-Naphthalindicarbonsäure. 4,4'-Diphenyldicarbonsäure, 4,4'-Diphenylsulfondicarbonsäure, 4,4'-Benzophenondicarbonsäure, 1,1,3-Trimethyl-5-carboxyl-3-(p-carboxylphenyl)-indan, 4,4'-Diphenyletherdicarbonsäure, Bis-p-(carboxylphenyl)-methan oder Bis-p-(carboxylphenyl)-ethan.

Bevorzugt sind die aromatischen Dicarbonsäuren, unter ihnen besonders Terephthalsäure und Isophthalsäure.

Weitere geeignete Dicarbonsäuren sind jene, die -CO-NH-Gruppen enthalten; sie sind in der DE-A-2 414 349 beschrieben. Auch Dicarbonsäuren, die N-heterocyclische Ringe enthalten, sind geeignet, z.B. solche, die sich von carboxylalkylierten, carboxylphenylierten oder carboxybenzylierten Monoamin-s-triazindicarbonsäuren (vgl. DE-A-2 121 184 und 2 533 675), Mono- oder Bishydantoinen, gegebenenfalls halogenierten Benzimidazolinen oder Parabansäure ableiten. Die Carboxyalkylgruppen kann hierbei 3 bis 20 C-Atome enthalten.

Geeignete aliphatische Diole sind die linearen und verzweigten aliphatischen Glykole, besonders die mit 2 bis 12, insbesondere 2 bis 6 Kohlenstoffatomen im Molekül, z.B.: Ethylenglykol, 1,2- und 1,3-Propylenglykol, 1,2-, 1,3-, 2,3- oder 1,4-Butandiol, Pentylglykol, Neopentylgiykol, 1,6-Hexandiol, 1,12-Dodecandiol. Ein geeignetes cycloaliphatisches Diol ist z.B. 1,4-Dihydroxycyclohexan. Weitere geeignete aliphatische Diole sind z.B. 1,4-Bis(hydroxymethyl)cyclohexan, aromatisch-aliphatische Diole wie p-Xylylenglykol oder 2,5-Dichlor-p-xylylenglykol, 2,2-(β-Hydroxyethoxyphenyl)-propan sowie Polyoxyalkylenglykol wie Diethylenglykol, Triethylenglykol, Polyethylenglykol oder Polypropylenglykol. Die Alkylendiole sind bevorzugt linear und enthalten insbesondere 2 bis 4 Kohlenstoffatome.

Bevorzugte Diole sind die Alkylendiole, 1,4-Dihydroxycyclohexan und 1,4-Bis(hydroxymethyl)cyclohexan. Insbesondere bevorzugt sind Ethylenglykol und 1,4-Butandiol.

Weitere geeignete aliphatische Diole sind die β-hydroxyalkylierten, besonders β-hydroxyethylierten Bisphenole wie 2,2-Bis[4'-(β-hydroxyethoxy)-phenyl]-propan. Weitere Bisphenole sind später genannt.

Eine weitere Gruppe von geeigneten aliphatischen Diolen sind die in den deutschen Offenlegungsschriften 1 812 003, 2 342 432, 2 342 372 und 2 453 326 beschriebenen heterocyclischen Diole. Beispiele sind:
N,N'-Bis-(β-hydroxyethyl-5,5-dimethyl)-hydantoin, N,N'-Bis-(β-hydroxypropyl-5,5-dimethyl)-hydantoin, Methylen-bis-[N-(β-hydroxyethyl)-5-methyl-5-ethylhydantoin], Methylen-bis-[N-(β-hydroxyethyl)-5,5-dimethylhydantoin], N,N'-Bis-(β-hydroxyethyl)benzylimidazolon,-(tetrachlor)-benzimidazolon oder -(tetrabrom)-benzimidazolon.

Als aromatische Diole kommen einkernige Diphenole in Betracht und besonders zweikernige, die an jedem aromatischen Kern eine Hydroxylgruppe tragen. Unter aromatisch werden bevorzugt kohlenwasserstoffaromatische Reste wie z.B. Phenylen oder Naphthylen verstanden. Neben z.B. Hydrochinon, Resorcin oder 1,5-, 2,6- und 2,7-Dihydroxynaphthalin sind besonders die Bisphenole zu nennen, die durch die folgenden Formeln dargestellt werden können:

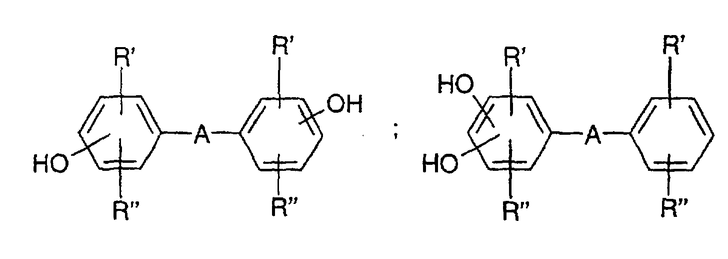

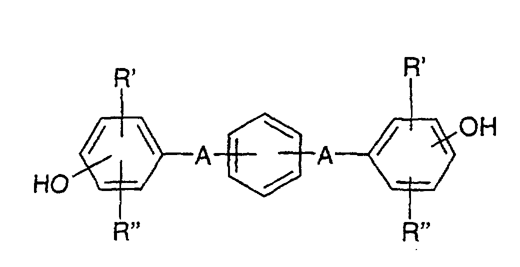

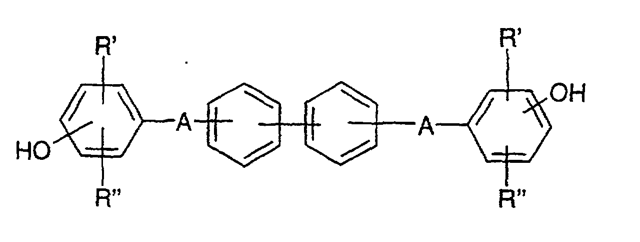

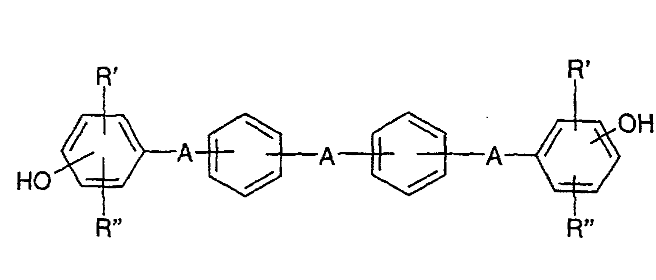

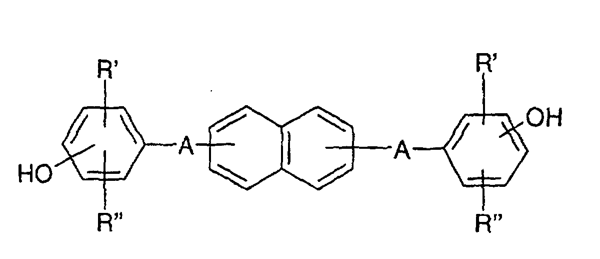

Die Hydroxylgruppen können sich in m-Stellung, besonders aber in p-Stellung befinden, R' und R" können in dieser Formel Alkyl mit 1 bis 6 C-Atomen, Halogen wie Chlor oder Brom und insbesondere Wasserstoffatome bedeuten. A kann für eine direkte Bindung stehen, oder -O-, -S-, -(O)S(O)-, -C(O)-, -P(O)(C₁-C₂₀-Alkyl)-, gegebenenfalls substituiertes Alkyliden, Cycloalkyliden oder Alkylen bedeuten.

Beispiele für gegebenenfalls substituiertes Alkyliden sind:
Ethyliden, 1,1- oder 2,2-Propyliden, 2,2-Butyliden, 1,1-Isobutyliden, Pentyliden, Hexyliden, Heptyliden, Octyliden, Dichlorethyliden, Trichlorethyliden.

Beispiele für gegebenenfalls substituiertes Alkylen sind Methylen, Ethylen, Phenylmethylen, Diphenylmethylen, Methylphenylmethylen. Beispiele für Cycloalkyliden sind Cyclopentyliden, Cyclohexyliden, Cycloheptyliden und Cyclooctyliden.

Beispiele für Bisphenole sind:
Bis-(p-hydroxyphenyl)-ether oder -thioether, Bis-(p-hydroxyphenyl)-sulfon, Bis-(p-hydroxyphenyl)-methan, Bis-(4-hydroxyphenyl)-2,2'-biphenyl, Phenylhydrochinon, 1,2-Bis-(p-hydroxyphenyl)-ethan, 1-Phenyl-bis-(p-hydroxyphenyl)-methan, Diphenyl-bis-(p-hydroxyphenyl)-methan, Diphenyl-bis-(p-hydroxyphenyl)-methan, Bis-(3,5-dimethyl-4-hydroxyphenyl)-sulfon, Bis-(3,5-dimethyl-4-hydroxyphenyl)-p-diisopropylbenzol, Bis-(3,5-dimethyl-4-hydroxyphenyl)-m-diisopropylbenzol 2,2-Bis-(3',5'-dimethyl-4'-hydroxyphenyl)-propan, 1,1- oder 2,2-Bis-(p-hydroxyphenyl)-butan, 2,2-Bis-(p-hydroxyphenyl)-hexafluorpropan, 1,1-Dichlor- oder 1,1,1-Trichlor-2,2-bis-(p-hydroxyphenyl)-ethan, 1,1-Bis-(p-hydroxyphenyl)-cyclopentan und besonders 2,2-Bis-(p-hydroxyphenyl)-propan (Bisphenol-A), 1,1-Bis-(p-hydroxyphenyl)-3,3,5-trimethylcyclohexan und 1,1-Bis-(p-hydroxyphenyl)-cyclohexan (Bisphenol-C).

Geeignete Polyester von Hydroxycarbonsäuren sind z.B. Polycaprolacton, Polypivalolacton oder die Polyester von 4-Hydroxycyclohexancarbonsäure, 2-Hydroxy-naphthalin-6-carbonsäure oder 4-Hydroxybenzoesäure.

Weiterhin sind auch Polymere, die überwiegend Esterbindungen, aber auch andere Bindungen enthalten können, geeignet, wie z.B. Polyesteramide oder Polyesterimide.

Polyester mit aromatischen Dicarbonsäuren haben die grösste Bedeutung erlangt, insbesondere die Polyalkylenterephthalate. Bevorzugt sind daher erfindungsgemässe Formmassen, in denen der Polyester aus mindestens 30 Mol%, bevorzugt mindestens 40 Mol%, aromatische Dicarbonsäuren und zu mindestens 30 Mol%, vorzugsweise mindestens 40 Mol%, aus Alkylendiolen mit bevorzugt 2 bis 12 C-Atomen aufgebaut ist, bezogen auf den Polyester.

Insbesondere ist in diesem Fall das Alkylendiol linear und enthält 2 bis 6 C-Atome, wie z.B. Ethylen-, Tri-, Tetra- oder Hexamethylenglykol und die aromatische Dicarbonsäure ist Terephthal- und/oder Isophthalsäure.

Besonders geeignete Polyester sind Polyethylenterephthalat (PET), Polybutylenterephthalat (PBT), Polyethylenenaphthalat (PEN) und entsprechende Copolymere bzw. Blends, wie z.B. PBT/PC, PBT/ASA, PBT/ABS, PET/ABS, PET/PC oder auch PBT/PET/PC, wobei PET und seine Copolymere sowie PBT-Blends speziell bevorzugt sind.

Unter Polycarbonat (PC) ist sowohl Neu-Polycarbonat wie auch Polycarbonat-Recyclat zu verstehen. Polycarbonat (PC) wird beispielsweise aus Bisphenol A und Phosgen bzw. einen Phosgen-Analogon wie Trichloromethylchloroformat, Triphosgen oder Diphenylcarbonat durch Kondensation im letzten Falle in der Regel unter Zugabe eines geeigneten Umesterungskatalysators wie z.B. eines Borhydrids, eines Amins wie 2-Methylimidazol oder eines quaternären Ammoniumsalzes erhalten; neben Bisphenol A können zusätzlich auch noch andere Bisphenol-Komponenten verwendet werden, auch können im Benzolkern halogenierte Monomere eingesetzt werden. Als besonders geeignete Bisphenol-Komponenten sind zu erwähnen: 2,2-Bis-(4'-hydroxyphenyl)-propan (Bisphenol A), 2,4'-Dihydroxydiphenylmethan, Bis-(2-hydroxyphenyl)-methan, Bis-(4-hydroxyphenyl)-methan, Bis-(4-hydroxy-5-propylphenyl)-methan, 1,1-Bis-(4'-hydroxyphenyl)-ethan, Bis-(4-hydroxyphenyl)-cyclohexylmethan, 2,2-Bis-(4'-hydroxyphenyl)-1-phenylpropan, 2,2-Bis-(3',5'-dimethyl-4'-hydroxyphenyl)-propan, 2,2-Bis-(3',5'-dibromo-4'-hydroxyphenyl)-propan, 2,2-Bis-(3',5'-dichloro-4'-hydroxyphenyl)-propan, 1,1-Bis-(4'-hydroxyphenyl)-cyclododecan, 1,1-Bis-(3',5'-dimethyl-4'-hydroxyphenyl)-cyclododecan, 1,1-Bis-(4'-hydroxyphenyl)-3,3,5-trimethylcyclohexan, 1,1-Bis-(4'-hydroxyphenyl)-3,3,5,5-tetramethylcyclohexan, 1,1-Bis-(4'-hydroxyphenyl)-3,3,5-trimethylcyclopentan sowie die weiter oben angegebenen Bisphenole. Weiterhin können die Polycarbonate auch durch geeignete Mengen von mehr als difunktionellen Monomeren verzweigt vorliegen (Beispiele wie weiter oben für die Polyester angegeben).

Die im erfindungsgemässen Verfahren verwendbaren Polykondensat-Copolymere oder Blends werden in üblicher Art und Weise aus den Ausgangspolymeren hergestellt.

Bevorzugt sind als Polyester-Komponente PBT und PET und als PC-Komponente ein PC auf Bisphenol-A-Basis. Das Verhältnis Polyester zu PC ist bevorzugt 95:5 bis 5:95, wobei ein Verhältnis, bei dem eine Komponente mindestens 70% ausmacht, besonders bevorzugt ist.

Besondere Bedeutung erlangt die Erfindung bei Polykondensat-Recyclaten, wie sie bei Produktionsabfällen, Wertstoffsammlungen oder durch Rücknahmeverpflichtungen z.B. bei der Automobilindustrie oder im Elektrobereich gewonnen werden. Die Polykondensat-Recyclate sind dabei in vielfältiger Weise thermisch und/oder hydrolytisch geschädigt. Ausserdem können diese Recyclate auch in untergeordneten Mengen Beimischungen von Kunststoffen anderer Struktur wie beispielsweise Polyolefine, Polyurethane, ABS oder PVC enthalten. Zusätzlich können diese Recydate auch Beimischungen durch übliche Verunreinigungen wie z.B. Reste von Farbstoffen, Kontaktmedien oder Lacken, Metallspuren, Wasserspuren, Spuren von Betriebsmitteln oder anorganische Salze enthalten. Handelt es sich dabei um Blends oder Mischungen kann die Verträglichkeit durch Zugabe von Compatibilisatoren verbessert werden.

Besonders bevorzugt setzt man als Polykondensat Polyamid 6, Polyamid 6.6 oder ein entsprechendes Recyclat oder Copolymere oder Blends davon ein.

Ebenfalls besonders bevozugt setzt man als Polykondensat ein Polybutylenterephthalat /Polycarbonat-Blend oder ein Blend enthaltend vorwiegend Polybutylenterephthalat/Polycarbonat oder ein entsprechendes Recyclat oder ein Blend aus einem Recyclat und einer Neukunststoffkomponente ein.

Eine weiteres besonders bevorzugtes Polykondensat ist Polycarbonat oder ein entsprechendes Recyclat oder ein Blend aus einem Recyclat und einer Neukunststoffkomponente.

Bei den Polyesterrecyclaten ist Polyethylenterephthalat oder ein entsprechendes Recyclat oder ein Blend aus einem Recyclat und einer Neukunststoffkomponente ganz besonders bevorzugt.

Die erfindungsgemässen Diepoxide enthalten neben 2 Epoxidgruppen mindestens einen Tetramethylpiperidinrest im Molekül.

Bevorzugt wird als Diepoxidverbindung eine Verbindung der Formel (la) oder (lb) eingesetzt 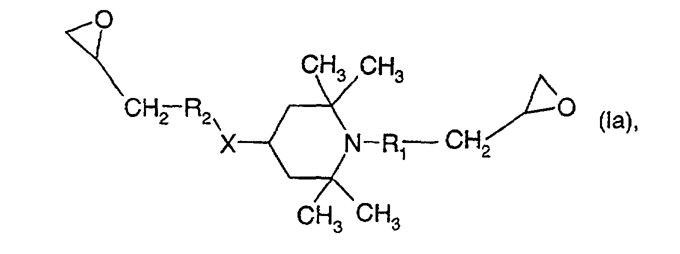 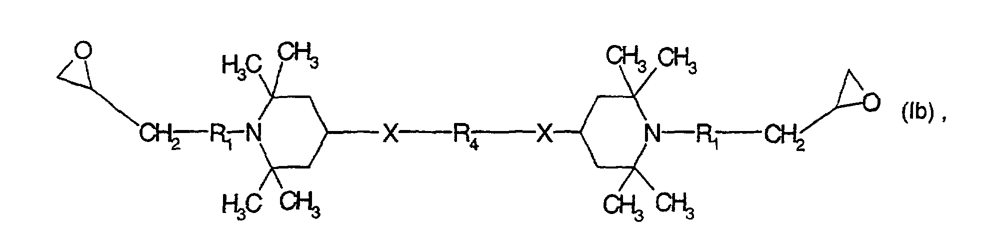 worin
R₁ und R₂ unabhängig voneinander eine direkte Bindung, C₁-C₁₈-Alkylen, C₃-C₁₈-Alkenylen, C₃-C₁₈-Alkynilen, Phenylen, durch ein oder mehrere O-Atome unterbrochenes Alkylen, -O(CH₂)ₙ-, -NR₃-(CH₂)ₙ-, -(O-CH₂-CH₂)ₙ-, -S-(CH₂)ₙ-, -(CH₂)ₙ-CH(COOC₂H₅) oder -(CH₂)ₙ-CH(CN) bedeuten;
R₃ unabhängig H oder C₁-C₁₈-Alkyl ist;
R₄ C₂-C₁₂-Alkylen, C₄-C₁₂-Alkenylen, Xylylen, einen zweiwertigen Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen oder einer aliphatischen, cycloaliphatischen oder aromatischen Dicarbaminsäure mit 8 bis 14 Kohlenstoffatomen bedeutet, wobei die Dicarbonsäure jeweils im aliphatischen, cycloaliphatischen oder aromatischen Teil unsubstituiert oder mit 1 oder 2 Gruppen -COOR₅ substituiert ist;
R₅ Wasserstoff, C₁-C₁₈-Alkyl, C₃-C₁₂-Alkenyl, C₅-C₇-Cycloalkyl, Phenyl oder Benzyl ist;
X O, S, NR₃ bedeutet und n eine Zahl von 1 bis 18 ist.

Alkyl mit bis zu 18 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl.

C₁-C₁₈-Alkylen bedeutet Methylen, Ethylen, Propylen, Butylen, Pentylen, Hexylen, Heptylen Octylen, Nonylen, Decylen, Undecylen, Dodecylen, Tridecylen, Tetradecylen, Pentadecylen, Hexadecylen, Heptadecylen oder Octadecylen sowie die entsprechenden Stellungsisomeren. Bevorzugt sind C₂-C₁₂-Alkylen, insbesondere C₃-C₆-Alkylen.

Alkenylen mit 3 bis 18 Kohlenstoffatomen bedeutet einen verzweigten oder unverzweigten Rest wie beispielsweise Propenylen, 2-Butenylen, 3-Butenylen, Isobutenylen, n-2,4-Pentadienylen, 3-Methyl-2-butenylen, n-2-Octenylen, n-2-Dodecenylen, iso-Dodecenylen, Oleylen, n-2-Octadecenylen oder n-4-Octadecenylen. Bevorzugt ist Alkenylen mit 3 bis 12, insbesondere 3 bis 6 Kohlenstoffatomen.

Alkinylen mit 3 bis 18 Kohlenstoffatomen bedeutet einen verzweigten oder unverzweigten Rest wie beispielsweise Propinylen ( ―CH₂-C≡CH), 2-Butinylen, 3-Butinylen, n-2-Octinylen, oder n-2-Octadecinylen. Bevorzugt ist Alkinylen mit 3 bis 12, insbesondere 3 bis 6 Kohlenstoffatomen.

Bedeutet R₄ einen zweiwertigen Rest einer Dicarbonsäure, so stellt R₄ beispielsweise einen Malonsäure-, Bernsteinsäure-, Glutarsäure-, Adipinsäure-, Korksäure-, Sebacinsäure-, Maleinsäure-, Itaconsäure-, Phthalsäure-, Dibutylmalonsäure-, Dibenzylmalonsäure-, Butyl-(3,5-di-tert-butyl-4-hydroxybenzyl)-malonsäure- oder Bicycloheptendicarbonsäure-Rest dar.

C₃-C₇-Cycloalkyl bedeutet beispielsweise Cyclopropyl, Cyclobutyl, Cyclopentyl, Cyclohexyl oder Cycloheptyl.

Besonders bevorzugt setzt man als Diepoxidverbindung eine Verbindung der Formel (la) oder (lb) ein 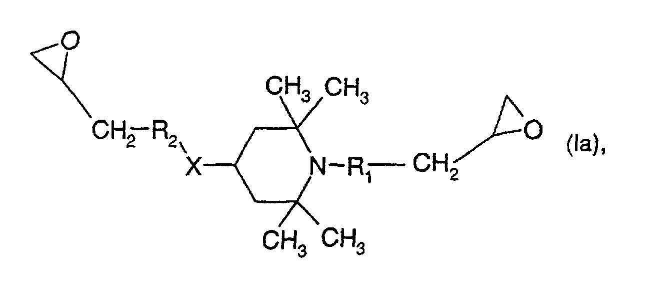 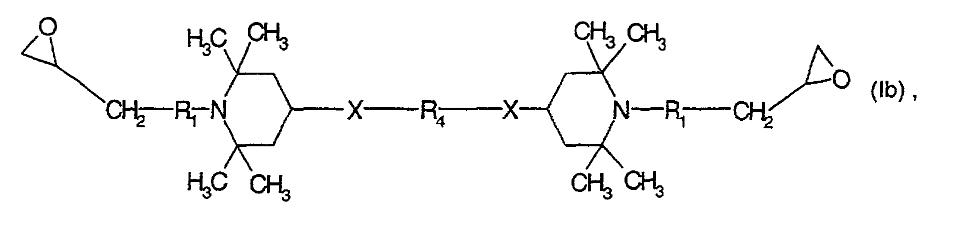 worin
R₁ und R₂ unabhängig voneinander eine direkte Bindung, C₁-C₆-Alkylen, durch ein oder mehrere O-Atome unterbrochenes Alkylen, -O-(CH₂)ₙ-, -NR₃-(CH₂)ₙ-, -(O-CH₂-CH₂)ₙ-, -(CH₂)ₙ-CH(COOC₂H₅) oder -(CH₂)ₙ-CH(CN) bedeuten;
R₃ H oder C₁-C₆-Alkyl ist;
R₄ C₂-C₁₂-Alkylen, C₄-C₁₂-Alkenylen, Xylylen, einen zweiwertigen Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen oder einer aliphatischen, cycloaliphatischen oder aromatischen Dicarbaminsäure mit 8 bis 14 Kohlenstoffatomen bedeutet, wobei die Dicarbonsäure jeweils im aliphatischen, cycloaliphatischen oder aromatischen Teil unsubstituiert oder mit 1 oder 2 Gruppen -COOR₅ substituiert ist;
R₅ Wasserstoff, C₁-C₆-Alkyl, C₃-C₆-Alkenyl, C₅-C₇-Cycloalkyl, Phenyl oder Benzyl ist;
X O bedeutet und
n eine Zahl von 1 bis 6 ist.

Ganz besonders bevorzugt setzt man als Diepoxidverbindung eine Verbindung der Formel (la) ein 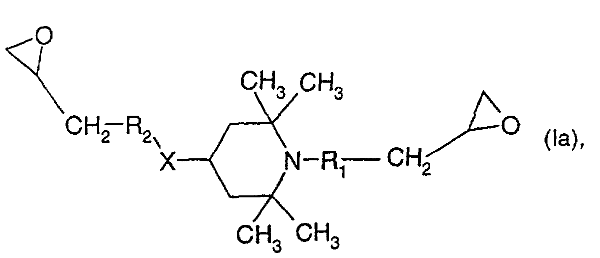 worin
R₁ und R₂ unabhängig voneinander eine direkte Bindung, C₁-C₆-Alkylen, -O-(CH₂)ₙ-, -NR₃-(CH₂)ₙ- oder -(O-CH₂-CH₂)ₙ-, bedeuten;
R₃ H oder C₁-C₆-Alkyl ist;
X O bedeutet und n eine Zahl von 1 bis 3 ist.

Beispiele für die verschiedenen Substituenten sind vorstehend genannt.

Bevorzugt setzt man die Diepoxidverbindung in einer Menge von 0,05 bis 10 Gew.-%, bezogen auf das Polykondensat ein, besonders bevorzugt von 0,1 bis 5 Gew.-%.

Die Diepoxidverbindungen sind zum Teil bekannt und nach gängigen Verfahren herstellbar. Herstellungsverfahren finden sich beispielsweise in EP-A-097 616,
DE 2 349 962, EP-A-073 386, DE 2 425 984, DE 2 630 798, US 3 904 581.

Besonders geeignet ist die Umsetzung eines sterisch gehinderten Amins, welches zwei nucleophile Endgruppen aufweist mit Epichlorhydrin. Beispiele für nucleophile Gruppen sind NH₂, NR₂, SH oder OH Gruppen.

Besonders vorteilhaft wird zusätzlich zu der Diepoxidverbindung ein Phosphonat eingesetzt.

Beispiele für Phosphonate sind solche der Formel X 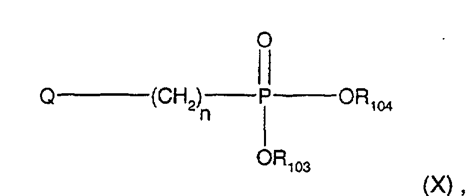 worin
R₁₀₃ H, C₁-C₂₀-Alkyl, unsubstituiertes oder durch C₁-C₄-Alkyl substituiertes Phenyl oder Naphthyl bedeutet,
R₁₀₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation oder das Ammoniumion ist,
n 0, 1, 2, 3, 4, 5 oder 6 bedeutet, und
r 1, 2, 3 oder 4 darstellt;
Q Wasserstoff, -X-C(O)-OR₁₀₇, oder einen Rest 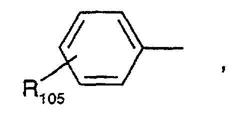 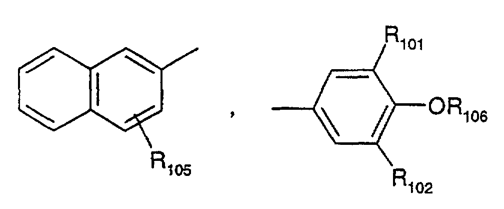 bedeutet,
R₁₀₁ iso-Propyl, tert-Butyl, Cyclohexyl oder mit 1-3 C₁-C₄-Alkylgruppen substituiertes Cyclohexyl bedeutet,
R₁₀₂ Wasserstoff, C₁-C₄-Alkyl, Cyclohexyl oder mit 1-3 C₁-C₄-Alkylgruppen substituiertes Cyclohexyl darstellt,
R₁₀₅ H, C₁-C₁₈-Alkyl, OH, Halogen oder C₃-C₇-Cycloalkyl ist;
R₁₀₆ H, Methyl, Trimethylsilyl, Benzyl, Phenyl, Sulfonyl oder C₁-C₁₈-Alkyl ist;
R₁₀₇ H, C₁-C₁₀-Alkyl oder C₃-C₇-Cycloalkyl ist;und
X Phenylen, mit C₁-C₄-Alkylgruppen substituiertes Phenylen oder Cyclohexylen bedeutet.

Bevorzugt sind sterisch gehinderte Hydroxyphenyl-alkyl-phosphonsäureester bzw. -halbester wie sie beispielsweise aus US-A-4778840 bekannt sind.

Besonders bevorzugt sind Verbindungen der Formel (Xa) 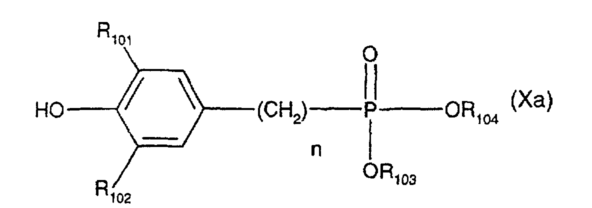 worin
R₁₀₁ H, iso-Propyl, tert-Butyl, Cyclohexyl oder mit 1-3 C₁-C₄-Alkylgruppen substituiertes Cyclohexyl bedeutet,
R₁₀₂ Wasserstoff, C₁-C₄-Alkyl, Cyclohexyl oder mit 1-3 C₁-C₄-Alkylgruppen substituiertes Cyclohexyl bedeutet,
R₁₀₃ C₁-C₂₀-Alkyl, unsubstituiertes oder durch C₁-C₄-Alkyl substituiertes Phenyl oder Naphthyl bedeutet,
R₁₀₄ Wasserstoff, C₁-C₂₀-Alkyl, unsubstituiertes oder durch C₁-C₄-Alkyl substituiertes Phenyl oder Naphthyl; oder M^{r+} / r darstellt,
M^{r+} ein r-wertiges Metallkation ist,
n 1, 2, 3, 4, 5 oder 6 bedeutet, und
r 1, 2, 3 oder 4 darstellt.

Halogen bedeutet Fluor, Chlor, Brom oder lod.

Bedeuten Substituenten Alkyl mit bis zu 18 Kohlenstoffatomen, so kommen hierfür die Reste wie Methyl, Ethyl, Propyl, Butyl, Pentyl, Hexyl und Octyl, Stearyl sowie entsprechende verzweigte Isomere in Frage, bevorzugt sind C₂-C₄-Alkyl.

Durch C₁-C₄-Alkyl substituiertes Phenyl oder Naphthyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl, 2,6-Diethylphenyl, 1-Methylnaphthyl, 2-Methylnaphthyl, 4-Methyhaphthyl, 1,6-Dimethylnaphthyl oder 4-tert-Butylnaphthyl.

Durch C₁-C₄-Alkyl substituiertes Cyclohexyl, das vorzugsweise 1 bis 3, insbesondere 1 oder 2 verzweigte oder unverzweigte Alkylgruppen-Reste enthält, bedeutet beispielsweise Cyclopentyl, Methylcyclopentyl, Dimethylcyclopentyl, Cyclohexyl, Methylcyclohexyl, Dimethylcyclohexyl, Trimethylcyclohexyl oder tert-Butylcyclohexyl.

Ein ein-, zwei-, drei- oder vier-wertiges Metallkation ist vorzugsweise ein Alkalimetall-, Erdalkalimetall-, Schwermetall- oder Aluminium-Kation, beispielsweise Na⁺, K⁺, Mg⁺⁺, Ca⁺⁺, Ba⁺⁺, Zn⁺⁺, Al⁺⁺⁺, oder Ti⁺⁺⁺⁺. Speziell bevorzugt ist Ca⁺⁺.

Bevorzugte Verbindungen der Formel X sind diejenigen, welche mindestens eine tert-Butyl-gruppe als Rest R₁₀₁ oder R₁₀₂ aufweisen. Ganz besonders bevorzugt sind Verbindungen worin R₁₀₁ und R₁₀₂ gleichzeitig tert-Butyl bedeutet.

Bevorzugt bedeutet n 1 oder 2 und ganz besonders bevorzugt 1.

Ebenfalls bevorzugt sind die Verbindungen der Formel XII, XIII, XIV, XV und XVI 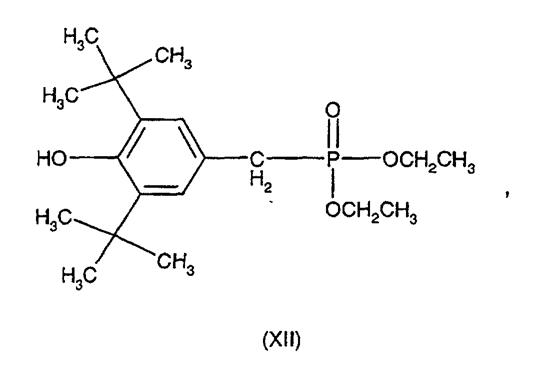 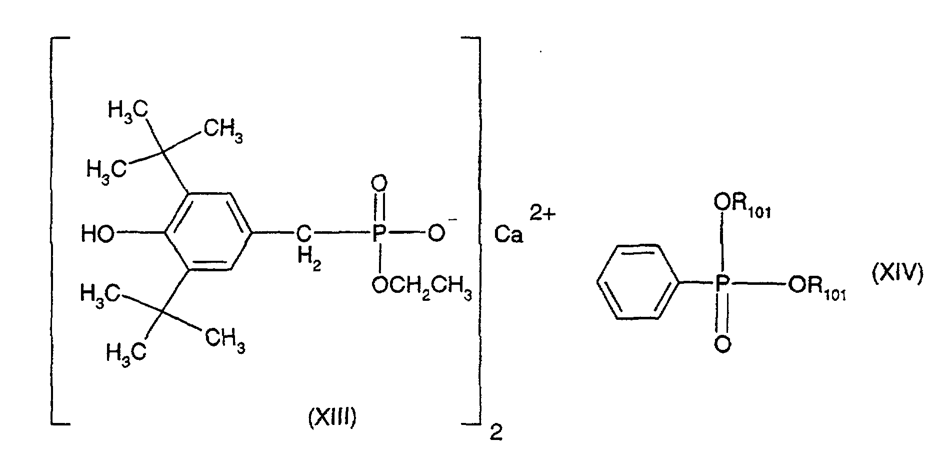 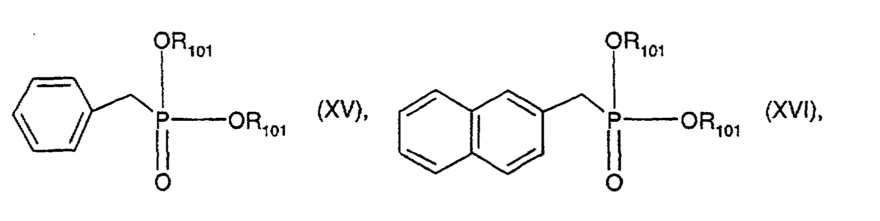 worin die R₁₀₁ unabhängig voneinander Wasserstoff oder M^{r+} / r bedeuten. Bedeutungen für M^{r+} / r sind bereits vorstehend angegeben

Die Verbindung der Formel XII ist im Handel unter dem Namen Irganox®1222 (Ciba Spezialitätenchemie) und diejenige der Formel XIII unter dem Namen Irganox®1425 (Ciba Spezialitätenchemie) erhältlich.

Die Verbindungen XIV, XV und XVI sind teilweise im Handel erhältlich oder nach Standardverfahren herstellbar.

Besonders bevorzugte Phosphonate sind Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-buryl-4-hydroxy-3-methyl-benzylphosphonat, Ca-Salz des 3,5-Di-tert-butyl-4-hydroxybenzyl-phosphonsäuremonoethylesters, Diethyl-3,5-di-tert-butyl-4-hydroxybenzylphosphonat.

Ganz besonders bevorzugt sind das Ca-Salz des 3,5-Di-tert-butyl-4-hydroxybenzyl-phosphonsäure-monoethylesters und Diethyl-3,5-di-tert-butyl-4-hydroxybenzylphosphonat.

Die erfindungsgemäss eingesetzten Epoxidverbindungen können gegebenenfalls mit weiteren reaktiven Verbindungen kombiniert werden, um zum Beispiel bestimmte Eigenschaftskombinationen möglichst wirtschaftlich zu erreichen. So kann es zum Beispiel wünschenswert sein, eine hohes Molekulargewicht zu erreichen und dabei eine etwas geringere Licht und Wärmebeständigkeit in Kauf zu nehmen.

Beispiele für weitere reaktive Zusätze sind nachstehend angegeben.
1. Epoxidverbindungen:
   I) Polyglycidyl- und Poly-(β-methylglycidyl)-ester erhältlich durch Umsetzung einer Verbindung mit mindestens zwei Carboxylgruppen im Molekül und Epichlorhydrin bzw. Glycerindichlorhydrin bzw. β-Methyl-epichlorhydrin. Die Umsetzung erfolgt zweckmässig in der Gegenwart von Basen.
      Als Verbindungen mit mindestens zwei Carboxylgruppen im Molekül können aliphatische Polycarbonsäuren verwendet werden. Beispiele für diese Polycarbonsäuren sind Glutarsäure, Adipinsäure, Pimelinsäure, Korksäure, Azelainsäure, Sebazinsäure oder dimerisierte bzw. trimerisierte Linolsäure.
      Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
      Weiterhin können aromatische Polycarbonsäuren Verwendung finden, wie beispielsweise Phthalsäure, lsophthalsäure, Trimellitsäure oder Pyromellitsäure.
      Ebenfalls können auch carboxylterminierte Addukte, z.B. von Trimellitsäure und Polyolen, wie beispielsweise Glycerin oder 2,2-Bis-(4-hydroxycyclohexyl)-propan verwendet werden.
   II) Polyglycidyl- oder Poly-(β-methylglycidyl)-ether erhältlich durch Umsetzung einer Verbindung mit mindestens zwei freien alkoholischen Hydroxygruppen und/oder phenolischen
      Hydroxygruppen und einem geeignet substituierten Epichlorhydrin unter alkalischen Bedingungen, oder in Anwesenheit eines sauren Katalysators und anschliessender Alkalibehandlung.
      Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen.
      Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
      Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
   III) Poly-(N-glycidyl)-Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, Toluidin, n-Butylamin, Bis(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
      Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidyl-derivate von Hydantoinen, wie von 5,5-Dimethylhydantoin.
   IV) Poly-(S-glycidyl)-Verbindungen wie beispielsweise Di-S-glycidylderivate, die sich von Dithiolen, wie beispielsweise Ethan-1,2-dithiol oder Bis-(4-mercaptomethylphenyl)-ether ableiten.
      Geeignete Epoxide sind beispielsweise:
      a) flüssige Bisphenol-A-diglycidylether wie Araldit® GY 240, Araldit® GY 250, Araldit® GY 260, Araldit® GY 266, Araldit® GY 2600, Araldit® MY 790;
      b) feste Bisphenol-A-diglycidylether wie Araldit® GT 6071, Araldit® GT 7071, Araldit® GT 7072, Araldit® GT 6063, Araldit® GT 7203, Araldit® GT 6064, Araldit® GT 7304, Araldit® GT 7004, Araldit® GT 6084, Araldit® GT 1999, Araldit® GT 7077, Araldit® GT 6097, Araldit® GT 7097, Araldit® GT 7008, Araldit® GT 6099, Araldit® GT 6608, Araldit® GT 6609, Araldit® GT 6610;
      c) flüssige Bisphenol-F-diglycidylether wie Araldit® GY 281, Araldit® GY282, Araldit® PY 302, Araldit® PY 306;
      d) feste Polyglycidylether von Tetraphenylethan wie CG Epoxy Resin® 0163;
      e) feste und flüssige Polyglycidylether von Phenolformaldehyd Novolak wie EPN 1138, EPN 1139, GY 1180, PY 307;
      f) feste und flüssige Polyglycidylether von o-Cresolformaldehyd Novolak wie ECN 1235, ECN 1273, ECN 1280, ECN 1299;
      g) flüssige Glycidylether von Alkoholen wie Shell® Glycidylether 162, Araldit® DY 0390, Araldit® DY 0391;
      h)flüssige Glycidylether von Carbonsäuren wie Shell® Cardura E Terephthalsäureester, Trimellithsäureester, Araldit® PY 284;
      i) feste heterocyclische Epoxidharze (Triglycidylisocyanurat) wie Araldit® PT 810;
      j) flüssige cycloaliphatische Epoxidharze wie Araldit® CY 179;
      k) flüssige N,N,O-Triglycidylether von p-Aminophenol wie Araldit® MY 0510;
      l) Tetraglycidyl-4,4'-methylenbenzamin oder N,N,N',N'-Tetraglycidyldiaminophenylmethan wie Araldit® MY 720, Araldit® MY 721.
2. Bisoxazoline, Bisoxazine, Bisoxazolone oderAcyllactame. Verbindungen dieser Klassen sind beispielsweise in der EP-A-0 583 807 und in der EP-A-0 785 967 beschrieben.
   Bevorzugte difunktionelle Verbindungen aus der Klasse der Bisoxazoline sind von T. Loontjens et al., Makromol. Chem., Macromol. Symp. 75, 211-216 (1993) beschrieben und bedeuten beispielsweise Verbindungen der Formel 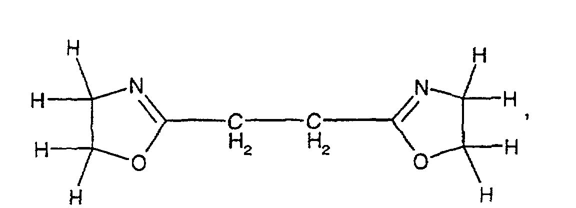 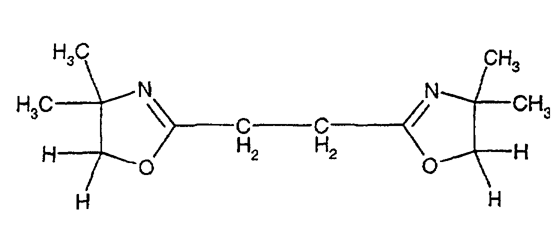 oder 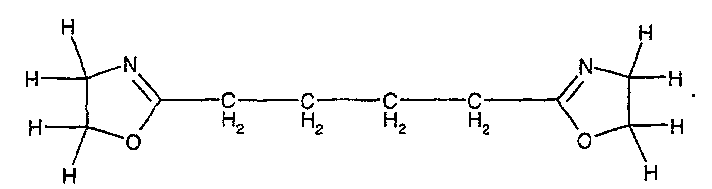 Polyfunktionelle, insbesondere difunktionelle Verbindungen aus der Klasse der Oxazine oder Oxazolone sind bekannt und beispielsweise von H. Inata et al., J. Applied Polymer Science Vol. 32, 4581-4594 (1986) beschrieben, besonders bevorzugt ist 2,2'-Bis(4H-3,1-benzoxazin-4-on).
   Polyfunktionelle, insbesondere difunktionelle Verbindungen aus der Klasse der Acyllactame bedeuten beispielsweise Verbindungen der Formel 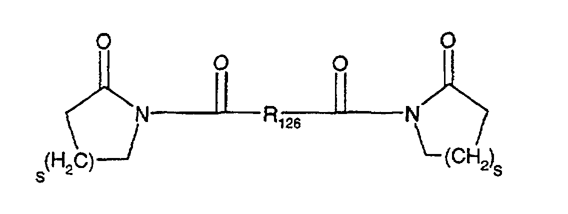 wobei s die Zahl 1 bis 16, insbesondere 5 bis 10, ist, und R₁₂₆ einen aromatischen Rest bedeutet.
   Bevorzugt sind Acyllactame der Formel, worin die Lactamringe Caprolactam oder Laurolactam bedeuten.
3. Diisocyanate, wie zum Beispiel Tetramethylendiisocyanat, Hexamethylendiisocyanat, Dodecamethylendiisocyanat, Eikosan-1,20-diisocyanat, 4-Butylhexamethylendiisocyanat, 2,2,4-oder 2,4,4-Trimethylhexamethylendiisocyanat, OCN(CH₂)₂O(CH₂)₂NCO, Toluol-2,4-diisocyanat, p-Phenylendiisocyanat, Xylylendiisocyanate, 3-Isocyanatomethyl-3,5,5-trimethylcyclohexylisocyanat, Naphthalindiisocyanate, Sulfonyldiisocyanate, 3,3'-, 4,4'- und 3,4'-Diisocyanate von Diphenylmethan, 2,2-Diphenylpropan und Diphenylether, 3,3'-Dimethyl-4,4'-diisocyanatodiphenyl, 3,3'-Dimethoxy-4,4'-diisocyanatcdiphenyl und 4,4'-Diisocyanatodiphenylmethan.
4. Dicyanate wie zum Beispiel Bisphenol-A-dicyanat.
5. Tetracarbonsäuredianhydride, wie zum Beispiel Pyromellithsäureanhydrid oder 3,3',4,4' Benzophenontetracarbonsäuredianhydrid.
6. Bismaleinimide wie Diphenylmethan-bismaleinimid oder 1,3-Phenylenbismaleimid.
7 Carbodiimide wie Poly(2,4,6-triisopropyl-1,3-phenylencarbodiimid).

Besonders bevorzugt ist ein Verfahren in welchem man als weiteren reaktiven Zusatz ein Diepoxid einsetzt, welches keine 2,2,6,6 Tetramethylpiperidingruppe enthält. Geeignete Diepoxide sind vorstehend beschrieben.

Neben den vorstehend genannten Phosphonaten und reaktiven Zusätzen können noch weitere Additive eingesetzt werden. Beispiele sind nachfolgend genannt.
1. Antioxidantien
   1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxy-methylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.
   1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
   1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
   1.4. Tocopherole, z.B. α-Tocopherol, β-Tocopherol, γ-Tocopherol, δ-Tocopherol und Mischungen davon (Vitamin E).
   1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
   1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
   1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
   1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
   1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.
   1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
   1.11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
   1.12. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.13. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.15. Ester der 3,5-Di-tert-butvl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
   1.16. Amide der β-(3,5-Di-tert-butyl-4-hydroxyphenyl)-propionsäure, wie z.B. N,N'-Bis(3,5-di-tert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard® XL-1 der Firma Uniroyal).
   1.17. Ascorbinsäure (Vitamin C).
   1.18. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-lsopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-di-phenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.
2. UV-Absorber und Lichtschutzmittel
   2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(a,a-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxy-carbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 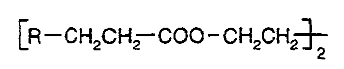 mit R = 3'-tert-Butyl-4'-hydroxy-5'-2H-benzotriazol-2-ylphenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
   2.2.2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw.- butylester, α-Carbomethoxy-p-methoxy-zimtsäure-methylester, N-(β-Carbomethoxy-β-cyanovinyl)-2-methyl-indolin.
   2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-amino-piperidin oder 1,2,2,6,6-Pentamethyl-4-aminopiperidin.
   2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.
   2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalidesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methyl-phenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-di-phosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.
   Besonders bevorzugt werden die folgenden Phosphite verwendet:
   Tris(2,4-di-tert-butylphenyl)-phosphit (Irgafos® 168, Ciba Spezialitätenchemie), Tris(nonylphenyl)-phosphit, 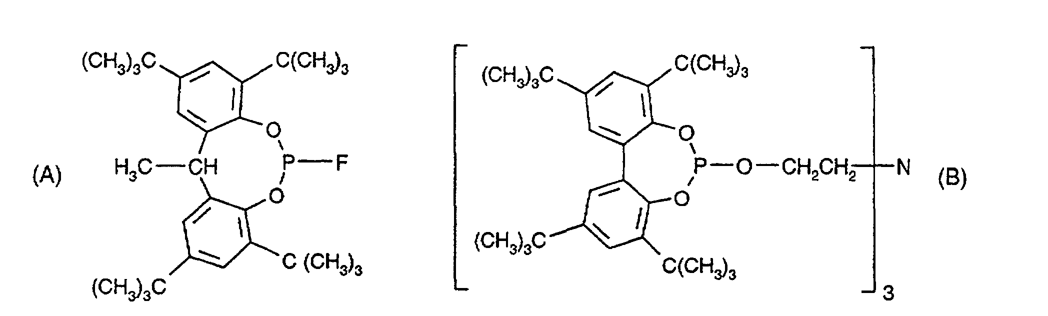 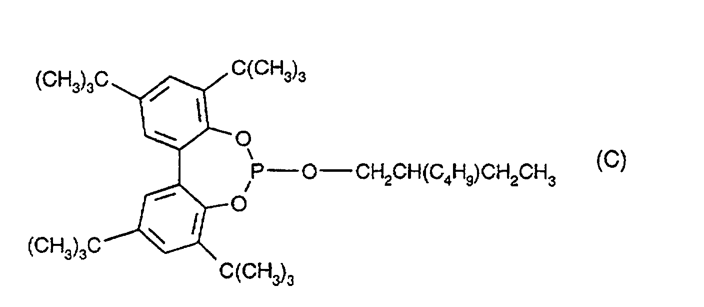 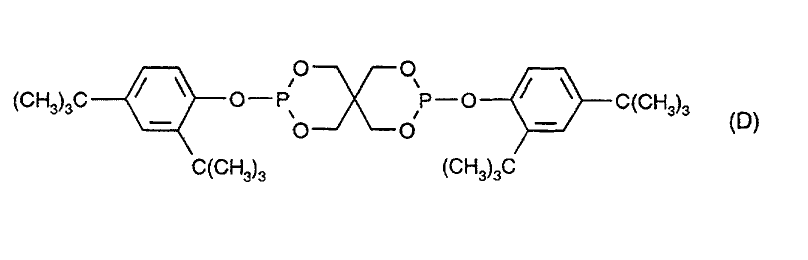 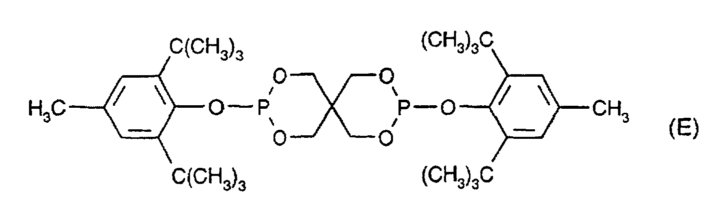 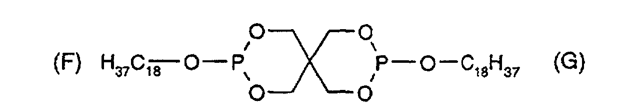 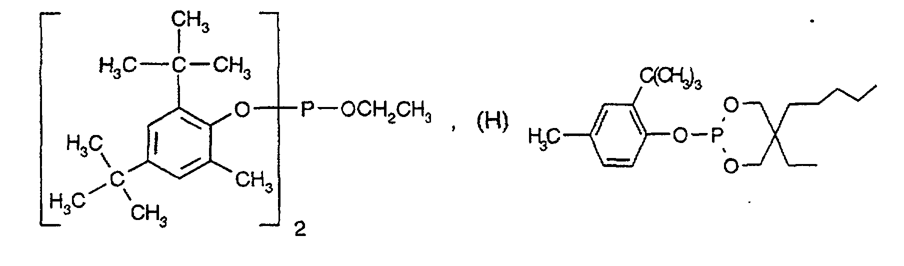
5. Hydroxylamine wie z.B. N,N-Dibenzylhydroxylamin, N,N-diethylhydroxylamin, N,N-Dioctyl-hydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Polyamidstabilisatoren, wie z.B. Kupfersalze in Kombination mit Jodiden und/oder Phosphorverbindungen und Salze des zweiwertigen Mangans.
10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali-und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.
11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("lonomere"). Besonders bevorzugt sind 1,3:2,4-Bis(3',4'-dimethylbenzyliden)sorbitol, 1,3:2,4 Di(para-methyldibenzyliden)sorbitol und 1,3:2,4-Di(benzyliden)sorbitol.
12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.
13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.
14. Benzofuranone bzw. Indolinone, wie z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxy-ethoxy)phenyl]-5,7-di-tert-butyl-benzofuran-2-on, 5,7-Di-tert-butyl-3-[4-(2-stearoyloxyethoxy)-phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-di-methylphenyl)-5,7-di-tert-butyl-benzofuran-2-on, 3-(3,5-Dimethyl-4-pivaloyloxy-phenyl)-5,7-di-tert-butyl-benzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.

Bevorzugt sind dabei Lichtschutzmittel aus den Klassen 2.1, 2.6 und 2.7 wie beispielsweise Lichtschutzmittel vom Typ Chimassorb 944, Chimassorb 119, Tinuvin 234, Tinuvin 312, Tinuvin 622 oder Tinuvin 770. Weiterhin bevorzugt sind aromatische Phosphite oder Phosphonite.

Ebenfalls bevorzugt ist ein Verfahren, in welchem man zusätzlich ein Phosphit und/oder ein sterisch gehindertes Phenol einsetzt.

Die Durchführung des Verfahrens kann in jeglichen beheizbaren und mit einer Rührvorrichtung ausgestatteten Gefässen erfolgen. Dies können beispielsweise geschlossene Apparate, wie Kneter, Mischer oder Rührkessel sein. Vorzugsweise wird das Verfahren in einem Extruder oder Knetwerk durchgeführt. Dabei ist es unerheblich, ob unter einer Inertatmosphäre oder in Anwesenheit von Luftsauerstoff gearbeitet wird.

Das zu erhitzende Polykondensatmaterial und das Diepoxid beziehungsweise die Mischung aus Diepoxid und Phosphonat werden üblicherweise bei Beginn des Verfahrens in den Apparat eingefüllt, eine nachträgliche Dosierung zu dem Polykondensat ist jedoch auch möglich, wobei auch die Einzelkomponenten in beliebiger Reihenfolge zugegeben werden können. Das Aufheizen oberhalb des Schmelz- bzw. Glaspunktes wird im allgemeinen bis zu einer homogenen Verteilung des Diepoxids beziehungsweise des Phosphonats unter Rühren durchgeführt. Die Temperatur richtet sich dabei nach dem verwendeten Polykondensat. Bei kristallinen Polykondensaten arbeitet man vorzugsweise im Bereich zwischen Schmelztemperatur und einer Temperatur etwa 50°C oberhalb der Schmelztemperatur. Bei amorphen Polykondensaten erfolgt das Verfahren etwa im Bereich zwischen 50°C und 150°C oberhalb der jeweiligen Glasübergangstemperatur.

Geeignete Temperaturen sind beispielsweise für
PA-6 (230-270°C);
PA-6.6 (260-300°C);
PBT (230-280°C);
PET (260-310°C);
PBT/PC (230-280°C); und
PC (260-320°C)

Das Diepoxid und gegebenenfalls weitere Zusätze können für die Zugabe unabhängig voneinander als Flüssigkeit, Pulver, Granulat oder in kompaktierter Form oder auch auf einem Trägermaterial, wie Kieselgel oder zusammen mit einem Polymerpulver oder Wachs, wie einem Polyethylenwachs, aber auch als sog. Masterbatch, vorliegen.

Ein weiterer Gegenstand der Erfindung ist die Verwendung eines Diepoxids, Welches die Epoxidgruppen endständig und als weiteres Strukturelement einen Tetramethylpiperidin Rest mittelständig zwischen den Epoxidgruppen enthält zur gleichzeitigen Molekulargewichtserhöhung und Stabilisierung eines Polyamides, Polyesters, Polycarbonats oder eines Copolymeren oder Blends dieser Polymeren, vorliegend sowohl als Neu-Polykondensat wie auch als Polykondensat-Recyclat oder als eine Mischung aus einem Recyclat und einer Neukunststoffkomponente.

Ebenfalls Gegenstand der Erfindung ist die Verwendung einer Mischung enthaltend ein Phosphonat und ein Diepoxid, welches die Epoxidgruppen endständig und als weiteres Strukturelement einen Tetramethylpiperidin Rest mittelständig zwischen den Epoxidgruppen enthält, zur gleichzeitigen Molekulargewichtserhöhung und Stabilisierung eines Polyamides, Polyesters, Polycarbonates oder eines Copolymern oder Blends dieser Polymeren, vorliegend sowohl als Neu-Polykondensat wie auch als Polykondensat-Recyclat oder als eine Mischung aus einem Recyclat und einer Neukunststoffkomponente.

Weitere Gegenstände der Erfindung sind eine Mischung, enthaltend ein Diepoxid, welches die Epoxidgruppen endständig und als weiteres Strukturelement einen Tetramethylpiperidin Rest mittelständig zwischen den Epoxidgruppen enthält und ein Neu-Polykondensat oder Polykondensat-Recyclat oder eine Mischung aus einem Polykondensat-Recyclat und einer Neukunststoffkomponente; sowie Polykondensate erhältlich nach dem Verfahren der vorliegenden Erfindung.

Die nachstehenden Beispiele verdeutlichen die Erfindung.

### Beispiele A: Herstellung der Diepoxide

### Beispiel 1

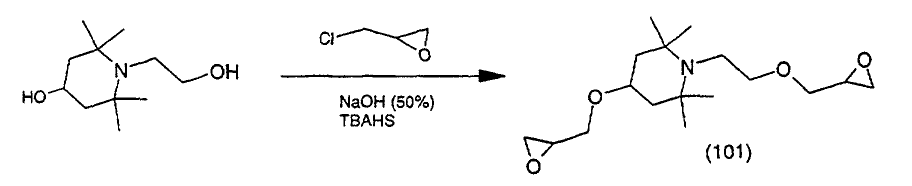

In einem 10Liter Planschliffgefäss mit Ankerrührer und Innenthermometer werden bei 30 °C 2960 g (32 Mol) Epichlorhydrin, 4800 ml 50%ige Natronlauge und 109 g (0.32 Mol) Tetrabutylammoniumhydrogensulfat (TBAHS) vorgelegt. Bei 25 °C werden 804 g (4 Mol) 1-(2-Hydroxyethyl)-4-hydroxy-2,2,6,6-tetramethylpiperidin zugegeben. Die Mischung wird stark gerührt, bis die Glycidyletherbildung abgeschlossen ist. Die organische Phase wird abgetrennt, getrocknet und am Rotationsverdampfer eingeengt. Der Rückstand wird am Hochvakuum destilliert. Man erhält 710 g (57%) einer Flüssigkeit, die bei 135 °C / 0.01 Torr siedet.

| Mikroanalyse | | |
|---|---|---|
| | Berechnet | Gefunden |
| C | 65.14% | 64.97% |
| H | 9.97 % | 9.94% |
| N | 4.47 % | 4.54% |

| H-NMR (CDCl₃) | | |
|---|---|---|
| 1.11 und 1.19 ppm | 12H, s | CH₃(Piperidin) |
| 1.24 - 1.34 ppm | 2H, m | CH₂ (Piperidin) |
| 1.82 - 1.87 ppm | 2H, m | CH₂ (Piperidin) |
| 2.59 - 2.62 ppm | 2H, m | CH₂ (Epoxidring) |
| 2.65 - 2.70 ppm | 2H, t | -N-CH₂- |
| 2.78 - 2.81 ppm | 2H, t | CH₂ (Epoxidring) |
| 3.12 - 3.13 ppm | 2H, m | CH (Epoxidring) |
| 3.35 - 3.46 ppm | 4H, m | -O-CH₂-C-N- und -O-CH₂-Epoxid |
| 3.55 - 3.63 ppm | 1H, m | >CH-O- |
| 3.65 - 3.75 ppm | 2H, m | -O-CH₂-Epoxid |

### Beispiele B: Anwendungsbeispiele

Auf einem Doppelschneckenextruder, Haake TW 100 wird ein Polyamid, Durethan B 30 S der Fa. Bayer AG mit den in der Tabelle 1 angegebenen Zusätzen extrudiert. Die maximale Extrusionstemperatur beträgt 230° C, die Drehzahl 50 Umdrehungen pro Minute. Von den einzelnen Proben wird der Schmelzflusswert (MFR) nach ISO 1133 bei 235°C und 2,16 kg gemessen. Die Ergebnisse sind in Tabelle 1 dargestellt. Dabei bedeutet eine Abnahme des MFR-Wertes eine Zunahme des Molekulargewichtes.

**Tabelle 1**

| Versuchsnummer | Zusatz | MFR (235°C (2,16kg) |
|---|---|---|
| Vergleichsbeispiel 1 | ohne Zusatz | 35,7 |
| Vergleichsbeispiel 2 | 0,5% Bisphenol-A-diglycidylester Araldit® GT 6071 | 27,1 |
| Beispiel 1 | 0,25% Diepoxid (101) aus Beispiel 1 | 22,7 |
| Beispiel 2 | 0,50% Diepoxid (101) aus Beispiel 1 | 12,2 |
| Beispiel 3 | 1,00% Diepoxid (101) aus Beispiel 1 | 2,1 |
| Vergleichsbeispiel 3 | 0,50% Irganox® 1171 | 36,5 |
| Beispiel 4 | 0,50% Diepoxid (101) aus Beispiel 1 0,25% Irganox® 1222 | 11,1 |
| Beispiel 5 | 0,50% Diepoxid (101) aus Beispiel 1 0,25% Irganox® 1171 | 15,2 |
| Beispiel 6 | 0,25% Diepoxid (101) aus Beispiel 1 0,25% Irganox® 1222 | 25,4 |

In Tabelle 2 sind die mechanischen Eigenschaften, bestimmt als Zugfestigkeit nach Stunden Wärmealterung bei 100° C, angegeben.

**Tabelle 2**

| | Zugfestigkeit (N/mm²) nach Stunden bei 100° C | | | | | |
|---|---|---|---|---|---|---|
| | | 0 | 500 | 1000 | 1500 | 2000 |
| Vergleichsbeispiel 1 | ohne Zusatz | 74 | 88 | 56 | 34 | 28 |
| Vergleichsbeispiel 2 | 0,5% Bisphenol-A-diglycidylester Araldit® GT 6071 | 77 | 85 | 62 | 40 | 31 |
| Beispiel 1 | 0,25% Diepoxid (101) aus Beispiel 1 | 72 | 86 | 65 | 44 | 35 |
| Beispiel 2 | 0,50% Diepoxid (101) aus Beispiel 1 | 71 | 85 | 78 | 54 | 33 |
| Beispiel 3 | 1,00% Diepoxid (101) aus Beispiel 1 | 71 | 84 | 80 | 73 | 38 |
| Beispiel 4 | 0,50% Diepoxid (101) aus Beispiel 1 0,25% Irganox® 1222 | 73 | 83 | 84 | 84 | 89 |

In Tabelle 3 sind die mechanischen Eigenschaften nach künstlicher Bewitterung in einem Weatherometer der Fa. Atlas (WOM Cl 65 A, Schwarztafel-Temperatur 63° C, relative Feuchte 60% mit Besprühung) dargestellt.

**Tabelle 3**

| | Zugfestigkeit (N/mm²)/ Dehnung in % nach 1000 Std. | |
|---|---|---|
| Vergleichsbeispiel 1 | ohne Zusatz | 28/7 |
| Vergleichsbeispiel 2 | 0,5% Bisphenol-A-diglycidylester Araldit® GT 6071 | 30/8 |
| Beispiel 2 | 0,50% Diepoxid (101) aus Beispiel 1 | 48/180 |
| Beispiel 4 | 0,50% Diepoxid (101) aus Beispiel 1 | 62/400 |
| | 0,25% Irganox® 1222 | |
| Beispiel 5 | 0,50% Diepoxid (101) aus Beispiel 1 | 60/400 |
| | 0,25% Irganox® 1171 | |
| Beispiel 6 | 0,25% Diepoxid (101) aus Beispiel 1 | 60 420 |
| | 0,25% Irganox® 1222 | |

Araldit® GT 6071 und Irganox® 1222 (Diethyl-3,5-di-tert-butyl-4-hydroxybenzylphosphonat) und Irganox® 1171 sind Handelsprodukte der Ciba Spezialitätenchemie. Irganox® 1171 ist eine Mischung 50% Irgafos 168 und 50% Irganox® 1098.

Irgafos 168 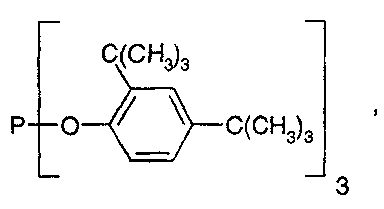 Irganox 1098

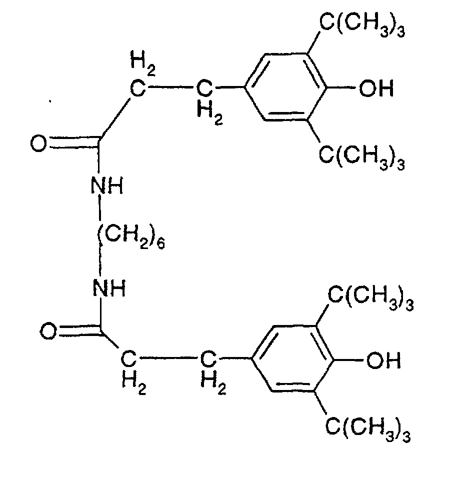

## Patentansprüche

1. Verfahren zur gleichzeitigen Molekulargewichtserhöhung und Stabilisierung, im wesentlichen ohne Vernetzung, von Polykondensaten, **dadurch gekennzeichnet, dass** man ein Polyamid, einen Polyester, ein Polycarbonat oder ein Copolymer oder Blend dieser Polymeren unter Zusatz mindestens eines Diepoxides, welches die Epoxidgruppen endständig und als weiteres Strukturelement einen Tetramethylpiperidin Rest mittelständig zwischen den Epoxidgruppen enthält, auf eine Temperatur oberhalb des Schmelzpunktes bei kristallinen Polykondensattypen bzw. oberhalb des Glaspunktes bei amorphen Polykondensattypen des Polymeren erhitzt.

2. Verfahren gemäss Anspruch 1, **dadurch gekennzeichnet, dass** das Polykondensat ein Polykondensat-Recyclat ist.

3. Verfahren nach Anspruch 1, **dadurch gekennzeichnet, dass** man die Diepoxidverbindung in einer Menge von 0,05 bis 10%, bezogen auf das Polykondensat einsetzt.

4. Verfahren nach Anspruch 1, **dadurch gekennzeichnet, dass** die Diepoxidverbindung eine Verbindung der Formel (la) oder (lb) ist, 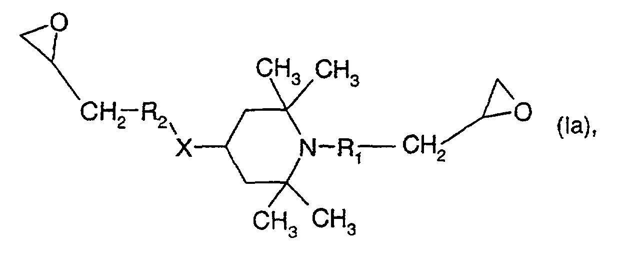 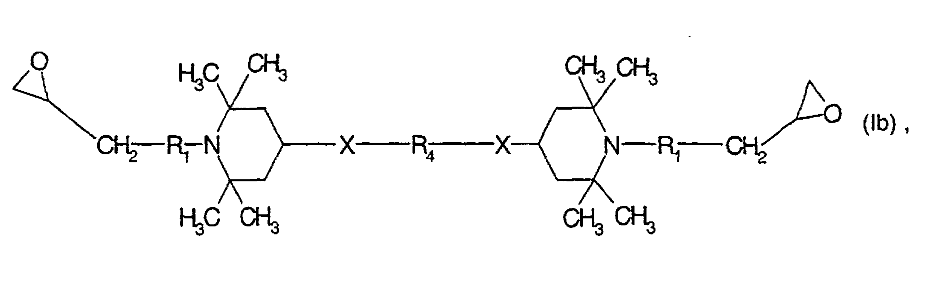 worin
R₁ und R₂ unabhängig voneinander eine direkte Bindung, C₁-C₁₈-Alkylen, C₃-C₁₈-Alkenylen, C₃-C₁₈-Alkynilen, Phenylen, durch ein oder mehrere O-Atome unterbrochenes Alkylen, -O(CH₂)ₙ-, -NR₃-(CH₂)ₙ-, -(O-CH₂-CH₂)ₙ-, -S-(CH₂)ₙ-, -(CH₂)ₙ-CH(COOC₂H₅) oder -(CH₂)ₙ-CH(CN) bedeuten;
R₃ unabhängig H oder C₁-C₁₈-Alkyl ist;
R₄ C₂-C₁₂-Alkylen, C₄-C₁₂-Alkenylen, Xylylen, einen zweiwertigen Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen oder einer aliphatischen, cycloaliphatischen oder aromatischen Dicarbaminsäure mit 8 bis 14 Kohlenstoffatomen bedeutet, wobei die Dicarbonsäure jeweils im aliphatischen, cycloaliphatischen oder aromatischen Teil unsubstituiert oder mit 1 oder 2 Gruppen -COOR₅ substituiert ist;
R₅ Wasserstoff, C₁-C₂₀-Alkyl, C₃-C₁₂-Alkenyl, C₅-C₇-Cycloalkyl, Phenyl oder Benzyl ist;
X O, S, NR₃ bedeutet und
n eine Zahl von 1 bis 18 ist.

5. Verfahren nach Anspruch 4, **dadurch gekennzeichnet, dass** die Diepoxidverbindung eine Verbindung der Formel (la) oder (lb) ist, 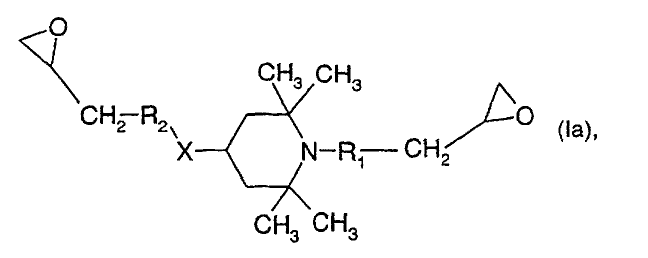 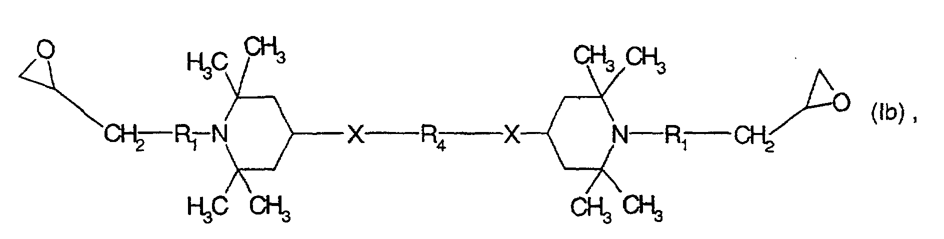 worin
R₁ und R₂ unabhängig voneinander eine direkte Bindung, C₁-C₆-Alkylen, durch ein oder mehrere O-Atome unterbrochenes Alkylen, -O-(CH₂)ₙ-, -NR₃-(CH₂)ₙ-, -(O-CH₂-CH₂)ₙ-, -(CH₂)ₙ-CH(COOC₂H₅) oder -(CH₂)ₙ-CH(CN) bedeuten;
R₃ H oder C₁-C₆-Alkyl ist;
R₄ C₂-C₁₂-Alkylen, C₄-C₁₂-Alkenylen, Xylylen, einen zweiwertigen Rest einer aliphatischen Dicarbonsäure mit 2 bis 36 Kohlenstoffatomen, einer cycloaliphatischen oder aromatischen Dicarbonsäure mit 8 bis 14 Kohlenstoffatomen oder einer aliphatischen, cycloaliphatischen oder aromatischen Dicarbaminsäure mit 8 bis 14 Kohlenstoffatomen bedeutet, wobei die Dicarbonsäure jeweils im aliphatischen, cycloaliphatischen oder aromatischen Teil unsubstituiert oder mit 1 oder 2 Gruppen -COOR₅ substituiert ist;
R₅ Wasserstoff, C₁-C₆-Alkyl, C₃-C₆-Alkenyl, C₅-C₇-Cycloalkyl, Phenyl oder Benzyl ist;
X O bedeutet und
n eine Zahl von 1 bis 6 ist.

6. Verfahren nach Anspruch 5, **dadurch gekennzeichnet, dass** die Diepoxidverbindung eine Verbindung der Formel (la) ist, 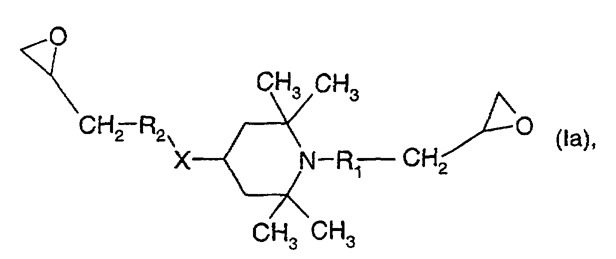 worin
R₁ und R₂ unabhängig voneinander eine direkte Bindung, C₁-C₆-Alkylen, -O-(CH₂)ₙ-, -NR₃-(CH₂)ₙ- oder -(O-CH₂-CH₂)ₙ-, bedeuten;
R₃ H oder C₁-C₆-Alkyl ist;
X O bedeutet und n eine Zahl von 1 bis 3 ist.

7. Verfahren nach Anspruch 1, **dadurch gekennzeichnet, dass** man als Polykondensat Polyamid 6, Polyamid 6.6 oder ein entsprechendes Recyclat oder Copolymere oder Blends davon einsetzt.

8. Verfahren nach Anspruch 1, **dadurch gekennzeichnet, dass** man als Polykondensat ein Polybutylenterephthalat/Polycarbonat-Blend oder ein Blend enthaltend vorwiegend Polybutylenterephthalat/Polycarbonat oder ein entsprechendes Recyclat oder ein Blend aus einem Recyclat und einer Neukunststoffkomponente einsetzt.

9. Verfahren nach Anspruch 1, **dadurch gekennzeichnet, dass** man als Polykondensat ein Polycarbonat oder ein entsprechendes Recyclat oder ein Blend aus einem Recyclat und einer Neukunststoffkomponente einsetzt.

10. Verfahren nach Anspruch 1, **dadurch gekennzeichnet, dass** man als Polykondensat ein PET oder ein entsprechendes Recyclat oder ein Blend aus einem Recyclat und einer Neukunststoffkomponente einsetzt.

11. Verfahren nach Anspruch 1, **dadurch gekennzeichnet, dass** man zusätzlich ein Phosphonat einsetzt.

12. Verfahren nach Anspruch 11, **dadurch gekennzeichnet, dass** man als Phosphonat Diethyl-3,5-di-tert-butyl-4-hydroxybenzylphosphonat oder 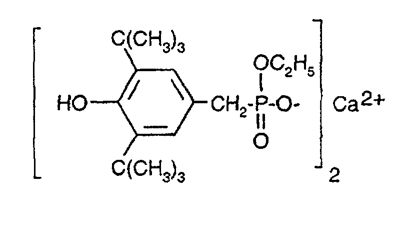 einsetzt.

13. Verfahren nach Anspruch 1, **dadurch gekennzeichnet, dass** man zusätzlich ein Phosphit und/oder ein sterisch gehindertes Phenol einsetzt.

14. Verfahren nach Anspruch 1, **dadurch gekennzeichnet, dass** man als weiteren reaktiven Zusatz ein Diepoxid einsetzt, welches keine 2,2,6,6 Tetramethylpiperidingruppe enthält.

15. Verwendung eines Diepoxids nach Anspruch 1 zur gleichzeitigen Molekulargewichtserhöhung und Stabilisierung eines Polyamides, Polyesters, Polycarbonats oder eines Copolymeren oder Blends dieser Polymeren vorliegend sowohl als Neu-Polykondensat wie auch als Polykondensat-Recyclat oder als eine Mischung aus einem Recyclat und einer Neukunststoffkomponente.

16. Verwendung einer Mischung enthaltend ein Phosphonat und ein Diepoxid gemäss Anspruch 1 zur gleichzeitigen Molekulargewichtserhöhung und Stabilisierung eines Polyamides, Polyesters, Polycarbonates oder eines Copolymem oder Blends dieser Polymeren, vorliegend sowohl als Neu-Polykondensat wie auch als Polykondensat-Recyclat oder als eine Mischung aus einem Recyclat und einer Neukunststoffkomponente.

17. Mischung, enthaltend ein Diepoxid nach Anspruch 1 und ein Neu-Polykondensat oder Polykondensat-Recyclat oder eine Mischung aus einem Polykondensat-Recyclat und einer Neukunststoffkomponente.

18. Polykondensate erhältlich nach einem Verfahren nach Anspruch 1 oder 2.

## Claims

1. A process for increasing the molecular weight of polycondensates and at the same time stabilizing them, essentially without crosslinking, which comprises heating a polyamide, a polyester, a polycarbonate or a copolymer or blend of these polymers with addition of at least one diepoxide comprising terminal epoxide groups and as a further structural element a tetramethylpiperidine radical located centrally between the epoxide groups to a temperature which is above the melting point of the polymer in the case of crystalline polycondensates or above the glass point in the case of amorphous polycondensates.

2. A process according to claim 1, wherein the polycondensate is a polycondensate recyclate.

3. A process according to claim 1, wherein the diepoxide compound is employed in an amount of from 0.05 to 10%, based on the polycondensate.

4. A process according to claim 1, wherein the diepoxide compound is a compound of the formula (Ia) or (Ib), 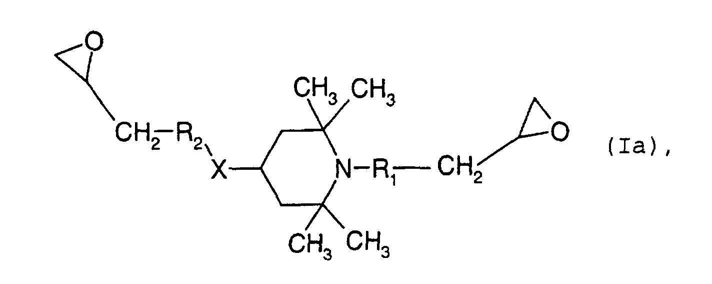 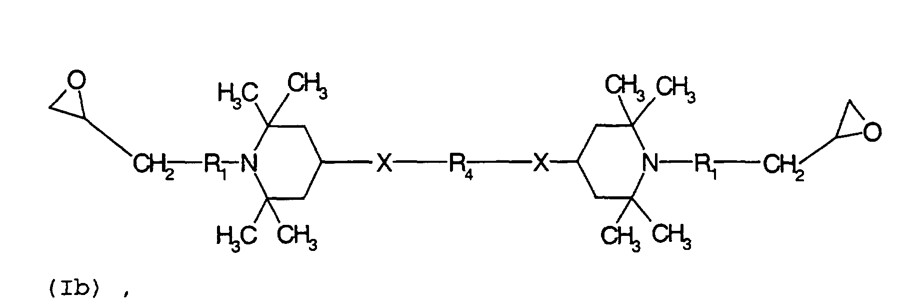 in which
R₁ and R₂ independently of one another are a direct bond, C₁-C₁₈alkylene, C₃-C₁₈alkenylene, C₃-C₁₈alkynylene, phenylene, alkylene interrupted by one or more O atoms, or are -O(CH₂)ₙ-, -NR₃-(CH₂)ₙ-, -(O-CH₂-CH₂)ₙ-, -S-(CH₂)ₙ-, -(CH₂)ₙ-CH(COOC₂H₅) or-(CH₂)ₙ-CH(CN) ;
R₃ independently is H or C₁-C₁₈alkyl;
R₄ is C₂-C₁₂alkylene, C₄-C₁₂alkenylene, xylylene, a divalent radical of an aliphatic dicarboxylic acid of 2 to 36 carbon atoms, of a cycloaliphatic or aromatic dicarboxylic acid of 8 to 14 carbon atoms or of an aliphatic, cycloaliphatic or aromatic dicarbamic acid of 8 to 14 carbon atoms, the dicarboxylic acid being unsubstituted or substitued in each case in the aliphatic, cycloaliphatic or aromatic moiety by 1 or 2 groups -COOR₅;
R₅ is hydrogen, C₁-C₂₀alkyl, C₃-C₁₂alkenyl, C₅-C₇cycloalkyl, phenyl or benzyl;
X is O, S or NR₃ and
n is from 1 to 18.

5. A process according to claim 4, wherein the diepoxide compound is a compound of the formula (Ia) or (Ib), 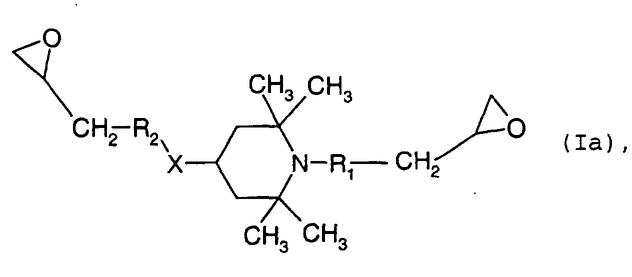 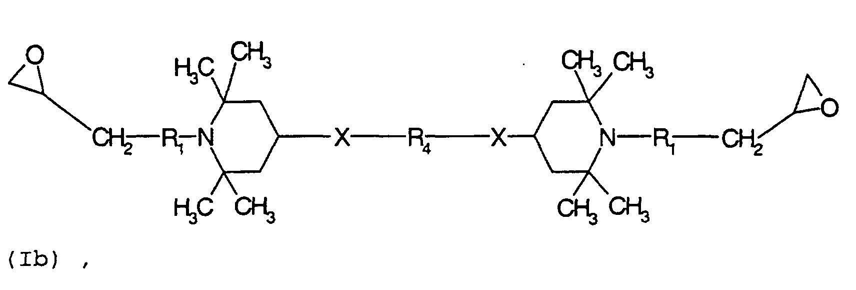 in which
R₁ and R₂ independently of one another are a direct bond, C₁-C₆alkylene, alkylene interrupted by one or more O atoms, or are -O-(CH₂)ₙ-, -NR₃-(CH₂)ₙ-, -(O-CH₂-CH₂)ₙ-, -(CH₂)ₙ-CH(COOC₂H₅) or - (CH₂)ₙ-CH(CN);
R₃ is H or C₁-C₆alkyl;
R₄ is C₂-C₁₂alkylene, C₄-C₁₂alkenylene, xylylene, a divalent radical of an aliphatic dicarboxylic acid of 2 to 36 carbon atoms, of a cycloaliphatic oder aromatic dicarboxylic acid of 8 to 14 carbon atoms or of an aliphatic, cycloaliphatic or aromatic dicarbamic acid of 8 to 14 carbon atoms, the dicarboxylic acid being unsubstituted or substituted in each case in the aliphatic, cycloaliphatic or aromatic moiety by 1 or 2 groups -COOR₅;
R₅ is hydrogen, C₁-C₆alkyl, C₃-C₆alkenyl, C₅-C₇cycloalkyl, phenyl or benzyl;
X is O and
n is from 1 to 6.

6. A process according to claim 5, wherein the diepoxide compound is a compound of the formula (Ia), 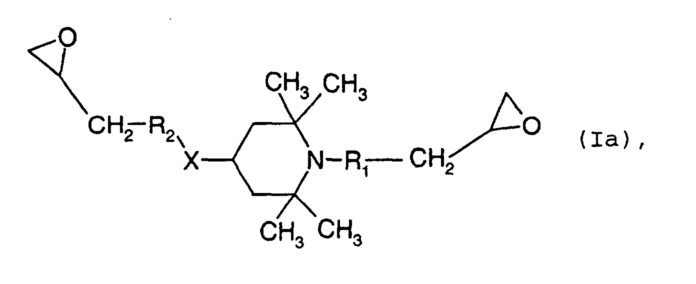 in which
R₁ and R₂ independently of one another are a direct bond, C₁-C₆alkylene, -O-(CH₂)ₙ-, -NR₃-(CH₂)ₙ- or -(O-CH₂-CH₂)ₙ-;
R₃ is H or C₁-C₆alkyl;
X is O and n is from 1 to 3.

7. A process according to claim 1, wherein the polycondensate employed is
polyamide 6, polyamide 6.6 or a corresponding recyclate or copolymers or blends thereof.

8. A process according to claim 1, wherein the polycondensate employed is a polybutylene terephthalate/polycarbonate blend or a blend comprising primarily polybutylene
terephthalate/polycarbonate or a corresponding recyclate or a blend of a recyclate and a virgin polymer component.

9. A process according to claim 1, wherein the polycondensate employed is a polycarbonate or a corresponding recyclate or a blend of a recyclate and a virgin polymer component.

10. A process according to claim 1, wherein the polycondensate employed is a PET or a corresponding recyclate or a blend of a recyclate and a virgin polymer component.

11. A process according to claim 1, wherein a phosphonate is employed in addition.

12. A process according to claim 11, wherein the phosphonate employed is diethyl 3,5-di-tert-butyl-4-hydroxybenzylphosphonate or

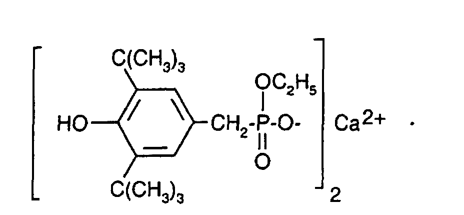

13. A process according to claim 1, wherein a phospite and/or a sterically hindered phenol are/is employed in addition.

14. A process according to claim 1, wherein as a further reactive additive a diepoxide is employed which contains no 2,2,6,6-tetramethylpiperidine group.

15. The use of a diepoxide according to claim 1 for increasing the molecular weight of, and at the same time stabilizing, a polyamide, polyester, polycarbonate or a copolymer or blend of these polymers present either as virgin polycondensate or as polycondensate recyclate or as a mixture of a recyclate and a virgin polymer component.

16. The use of a mixture comprising a phosphonate and a diepoxide as set forth in claim 1 for increasing the molecular weight of, and at the same time stabilizing, a polyamide, polyester, polycarbonate or a copolymer or blend of these polymers present either as virgin polycondensate or as polycondensate recyclate or as a mixture of a recyclate and a virgin polymer component.

17. A mixture comprising a diepoxide according to claim 1 and a virgin polycondensate or polycondensate recyclate or a mixture of a polycondensate recyclate and a virgin polymer component.

18. A polycondensate obtainable by a process according to claim 1 or 2.

## Revendications

1. Procédé pour l'augmentation de la masse moléculaire et la stabilisation simultanée, essentiellement sans réticulation, de polycondensats, **caractérisé en ce qu'**on chauffe un polyamide, un polyester, un polycarbonate ou un copolymère ou un mélange de ces polymères en ajoutant au moins un diépoxyde, qui contient les groupes époxydes en position terminale et comme autre élément de structure un reste de tétraméthylpipéridine en milieu de chaîne entre les groupes époxyde, à une température au-dessus du point de fusion pour les polycondensats de type cristallin ou au-dessus du point de transition vitreuse pour les polycondensats de type amorphe du polymère.

2. Procédé selon la revendication 1, **caractérisé en ce que** le polycondensat est un recyclat de polycondensat.

3. Procédé selon la revendication 1, **caractérisé en ce qu'**on utilise le composé diépoxyde en une quantité de 0,05 à 10 %, par rapport au polycondensat.

4. Procédé selon la revendication 1, **caractérisé en ce que** le composé diépoxyde est un composé de formule (Ia) ou (Ib), 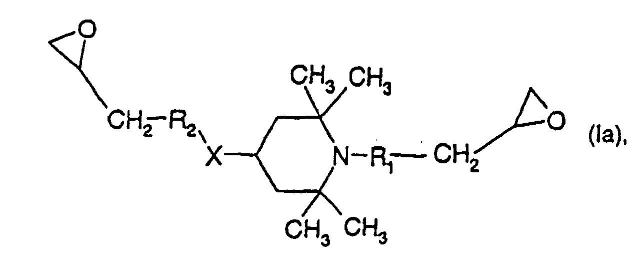 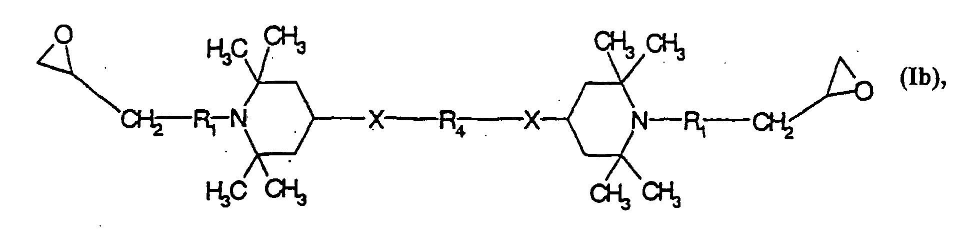 dans lesquelles
R₁ et R₂ représentent indépendamment l'un de l'autre une liaison directe, un groupe alkylène en C₁ à C₁₈, alcénylène en C₃ à C₁₈, alcynylène en C₃ à C₁₈, phénylène, alkylène interrompu par un ou plusieurs atomes O, -O(CH₂)ₙ-, -NR₃-(CH₂)ₙ-, - (O-CH₂-CH₂)ₙ-, -S-(CH₂)ₙ-, -(CH₂)ₙ-CH(COOC₂H₅) ou -(CH₂)ₙ-CH(CN) ;
R₃ est indépendamment H ou un groupe alkyle en C₁ à C₁₈ ;
R₄ est un groupe alkylène en C₂ à C₁₂, alcénylène en C₄ à C₁₂, xylylène, un reste divalent d'un acide dicarboxylique ayant de 2 à 36 atomes de carbone, d'un acide cycloaliphatique ou aromatique ayant de 8 à 14 atomes de carbone ou d'un acide dicarbamique aliphatique, cycloaliphatique ou aromatique ayant de 8 à 14 atomes de carbone, dans lequel l'acide dicarboxylique est respectivement non substitué dans la partie aliphatique, cycloaliphatique ou aromatique ou substitué avec 1 ou 2 groupes -COOR₅ ;
R₅ est un atome d'hydrogène, un groupe alkyle en C₁ à C₂₀, alcényle en C₃ à C₁₂, cycloalkyle en C₅ à C₇, phényle ou benzyle ;
X représente O, S, NR₃ et
n est un nombre de 1 à 18.

5. Procédé selon la revendication 4, **caractérisé en ce que** le composé diépoxyde est un composé de formule (Ia) ou (Ib), 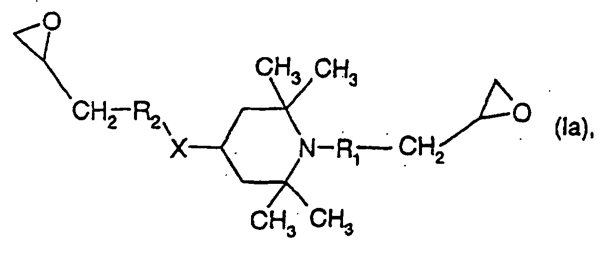 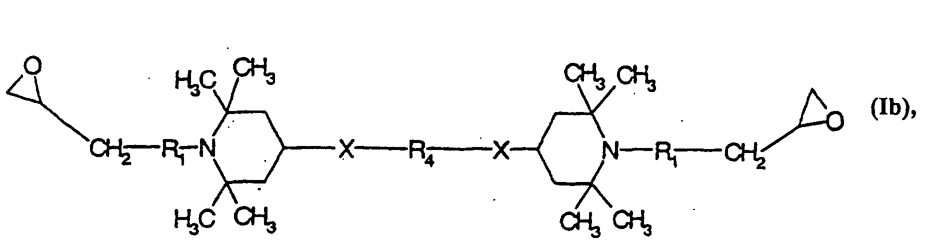 dans lesquelles
R₁ et R₂ représentent indépendamment l'un de l'autre une liaison directe, un groupe alkylène en C₁ à C₆, alkylène interrompu par un ou plusieurs atomes O, -O(CH₂)ₙ-, -NR₃-(CH₂)ₙ-, - (O-CH₂-CH₂)ₙ-, -(CH₂)ₙ-CH(COOC₂H₅) ou -(CH₂)ₙ-CH(CN) ;
R₃ est H ou un groupe alkyle en C₁ à C₆ ;
R₄ est un groupe alkylène en C₂ à C₁₂, alcénylène en C₄ à C₁₂, xylylène, un reste divalent d'un acide dicarboxylique ayant de 2 à 36 atomes de carbone, d'un acide dicarboxylique cycloaliphatique ou aromatique ayant de 8 à 14 atomes de carbone ou d'un acide dicarbamique aliphatique, cycloaliphatique ou aromatique ayant de 8 à 14 atomes de carbone, dans lequel l'acide dicarboxylique est respectivement non substitué dans la partie aliphatique, cycloaliphatique ou aromatique ou substitué avec 1 ou 2 groupes -COOR₅ ;
R₅ est un atome d'hydrogène, un groupe alkyle en C₁ à C₆, alcényle en C₃ à C₅, cycloalkyle en C₅ à C₇, phényle ou benzyle ;'
X représente O et
n est un nombre de 1 à 6.

6. Procédé selon la revendication 5, **caractérisé en ce que** le composé diépoxyde est un composé de formule (Ia) 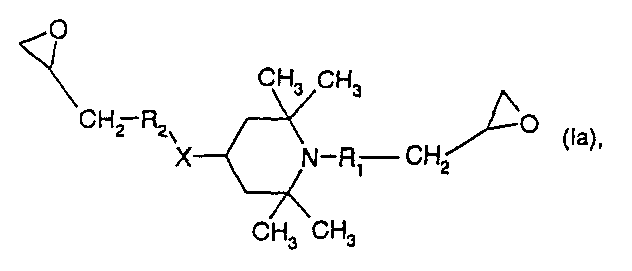 dans laquelle
R₁ et R₂ représentent indépendamment l'un de l'autre une liaison directe, un groupe alkylène en C₁ à C₆, -O-(CH₂)ₙ-, -NR₃-(CH₂)ₙ- ou -(O-CH₂-CH₂)ₙ- ;
R₃ est H ou un groupe alkyle en C₁ à C₆,
X représente O et n est un nombre de 1 à 3.

7. Procédé selon la revendication 1, **caractérisé en ce qu'**on utilise comme polycondensat le polyamide 6, le polyamide 6.6 ou un recyclat correspondant ou des copolymères ou des mélanges de ceux-ci.

8. Procédé selon la revendication 1, **caractérisé en ce qu'**on utilise comme polycondensat un mélange de polytéréphtalate de butylène et de polycarbonate ou un mélange contenant de manière prépondérante du polytéréphtalate de butylène et du polycarbonate ou un recyclat correspondant ou un mélange d'un recyclat et d'un composant de matière plastique neuve.

9. Procédé selon la revendication 1, **caractérisé en ce qu'**on utilise comme polycondensat un polycarbonate ou un recyclat correspondant ou un mélange d'un recyclat et d'un composant de matière plastique neuve.

10. Procédé selon la revendication 1, **caractérisé en ce qu'**on utilise comme polycondensat un PET ou un recyclat correspondant ou un mélange d'un recyclat et d'un composant de matière plastique neuve.

11. Procédé selon la revendication 1, **caractérisé en ce qu'**on utilise en plus un phosphonate.

12. Procédé selon la revendication 11, **caractérisé en ce qu'**on utilise en plus comme phosphonate le diéthyl-3,5-di-tert.-butyl-4-hydroxybenzylphosphonate ou

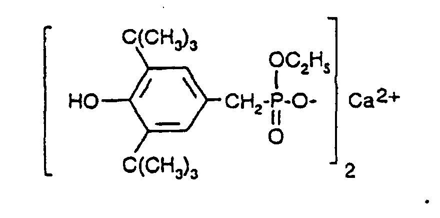

13. Procédé selon la revendication 1, **caractérisé en ce qu'**on utilise en plus un phosphite et/ou un phénol à empêchement stérique.

14. Procédé selon la revendication 1, **caractérisé en ce qu'**on utilise comme autre additif réactif un diépoxyde, qui ne contient pas de groupe 2,2,6,6-tétraméthylpipéridine.

15. Utilisation d'un diépoxyde selon la revendication 1 pour l'augmentation de la masse moléculaire et la stabilisation simultanée d'un polyamide, d'un polyester, d'un polycarbonate ou d'un copolymère ou de mélanges de ces polymères, étant présents aussi bien sous la forme d'un polycondensat neuf que d'un recyclat de polycondensat ou d'un mélange d'un recyclat et d'un composant de matière plastique neuve.

16. Utilisation d'un mélange contenant un phosphonate et un diépoxyde selon la revendication 1 pour l'augmentation de la masse moléculaire et la stabilisation simultanée d'un polyamide, d'un polyester, d'un polycarbonate ou d'un copolymère ou de mélanges de ces polymères, étant présents aussi bien sous la forme d'un polycondensat neuf que d'un recyclat de polycondensat ou d'un mélange d'un recyclat et d'un composant de matière plastique neuve.

17. Mélange contenant un diépoxyde selon la revendication 1 et un polycondensat neuf ou un recyclat de polycondensat ou un mélange d'un recyclat de polycondensat et d'un composant de matière plastique neuve.

18. Polycondensats qu'on peut obtenir par un procédé selon la revendication 1 ou 2.
